# EUROPEAN PATENT APPLICATION

(11) **EP 4 566 939 A1**
(43) Date of publication of application: **11.06.2025**
(21) Application number: 23214196.0
(22) Date of filing: 05.12.2023
(51) Int. Cl.: B64C 3/38, B64C 3/44, B64C 3/52, B64C 13/30, B64C 39/06

(54) **CLOSED-WINGED AIRCRAFT**

(71) Applicant: Alpraaz AB, 262 74 Ängelholm (SE)
(72) Inventor: von KOENIGSEGG, Christian, 266 54 VEJBYSTRAND (SE)
(74) Representative: Brann AB

(57) **Abstract**

1. A fixed-wing aircraft (10) that comprises: a fuselage (14), a closed wing (16), a first actuator arrangement (22), and a first connector arrangement (24). The closed wing (16) is coupled to the fuselage (14) and has a wingtip (18) and a first deformable wing portion (20). The first actuator arrangement (22) is arranged to supply a first input torque to the first connector arrangement (24) at an activation of the first actuator arrangement (22), the first connector arrangement (24) is arranged to apply an first output torque to the first deformable wing portion (20) at a supply of the first input torque to the connector arrangement. The first deformable wing portion (20) is arranged to elastically deform at an application of the first output torque to the first deformable wing portion (20). The closed wing (16) forms an outer support (26) at the wingtip (18) arranged to counter the first output torque.

## Description

### TECHNICAL FIELD

The proposed technology generally relates to the field of fixed-wing aircraft, and more specifically closed-winged aircraft.

### BACKGROUND

An airframe is understood as the structural parts of a fixed-wing aircraft. An airframe typically includes a fuselage, one or more wings, a vertical stabilizer, a horizontal stabilizer, and landing gear. The fuselage is an elongated body, usually with tapered or rounded ends to make its shape aerodynamically smooth. The fuselage joins the other parts of the airframe and usually provides space for the pilot, payload, and flight-control system. The wing is arranged to provide lift in flight. The wing typically has a root, or inner end, that is closest to the fuselage and a wingtip, or outer end, that is most distant from the fuselage. The wing is commonly attached to the fuselage at the root. The wing may provide stability in roll to stop the aircraft from rolling to the left or right in steady flight. Often, a pivotable aileron is mounted on the wing to control the roll of the aircraft.

The vertical stabilizer is typically a vertical fin-like structure mounted at the tail, or rear, of the aircraft and that protrudes above the fuselage. The vertical stabilizer provide stability in yaw to stop the aircraft from turning left or right in steady flight. Often, a pivotable rudder is attached to the vertical stabilizer to control the yaw. The horizontal stabilizer is a wing-like structure usually mounted at the tail near the vertical stabilizer. It can be mounted on the fuselage or on the vertical stabilizer. The horizontal stabilizer provide stability in pitch to stop the aircraft from tilting up or down in steady flight. Often, a pivotable elevator is attached to the horizontal stabilizer to control the pitch. Alternatively, with the horizontal stabilizer mounted on the fuselage, the complete horizontal stabilizer can be pivoted to control the pitch, which sometimes is called a flying tail. The vertical stabilizer and the horizontal stabilizer jointly form an empennage, or tail assembly, that provides stability during flight. The empennage may form a cruciform tail with the horizontal stabilizers connected to the vertical stabilizer between the fuselage and the top of the vertical stabilizer, or a T-tail with the horizontal stabilizers connected to the vertical stabilizer at the top of the vertical stabilizer.

The landing gear is typically a set of wheels, skids, or floats that support the aircraft while it is on the surface. On some aircraft, the landing gear retracts during steady flight to reduce drag.

A closed wing is a wing that effectively has two wing sections that are coupled at their respective outer ends to form a continuous surface. Effectively, the two wing sections jointly form the wingtip of the closed wing. There are several types of closed wings. For example, a box wing has a lower wing section and an upper wing section that are coupled by an upright, or vertical, fin between the outer ends of the wing sections. An annular box wing has a lower wing section and an upper wing section that merge at the outer ends of respective wing section in a smooth transition. A joined wing has a tandem-wing section layout in which a front low wing section sweeps back and/or a rear high wing section sweeps forward, typically with the wing and the fuselage roughly outlining a triangle when viewed from above the airframe.

There are different mountings of a wing. For example, in a low-wing mounting the wing is mounted near or below the bottom of the fuselage and in a mid-wing mounting the wing is mounted approximately halfway up the fuselage.

The leading edge is the forward edge of a wing, and the trailing edge is the rear edge of a wing. The leading edge leads the wing into the flow of air and the trailing edge retreats from the flow of air in flight. When the wing is viewed from astern, the leading edge is furthest away, and the trailing edge is the closest.

The length of a wing is the distance between the root of the wing and the outer end of the wing. A wing has an upper surface and a lower surface that meet at the leading edge and the trialing edge. The skin of a wing is the outer structure of the wing forming the edges and surfaces of the wing. A cantilevered wing is a self-supporting wing in steady flight with all the supporting structures located in or enclosed by the skin.

A wing is typically an airfoil, which is a streamlined body capable of generating significantly more lift than drag. The airfoil cross-section is a vertical cross-section of the wing in the intended direction of flight. The chord is an imaginary straight line joining the leading edge and trailing edge of an airfoil cross-section. The chord length is the length of the chord. The cord length may vary between the root and the wingtip. The camber of a wing is the asymmetry between the upper surface and the lower surface. The camber line, or mean line, is a curve that traces, or defines, the midway between the upper surface and the lower surface in an airfoil cross-section of the wing. It extends between the leading edge and the trailing edge of the wing.

An aircraft has a center of gravity. When not maneuvering in flight, there is no rotation about the center of gravity zero. During maneuvers, a fixed-wing aircraft rotates about its center of gravity. When there is no rotation about the center of gravity, the aircraft is said to be trimmed. The aircraft typically has hinged control surfaces, such as the ailerons, elevator, and rudder mentioned above, that produce aerodynamic forces in flight by which the aircraft can be maneuvered and trimmed.

### SUMMARY

In a first aspect of the proposed technology a fixed-wing aircraft is proposed that comprises: a fuselage, a closed wing, a first actuator arrangement, and a first connector arrangement. The closed wing is coupled to the fuselage and has a wingtip, or outer end, and a first deformable wing portion. The first actuator arrangement is arranged to supply a first input torque, or first input torsional moment, to the first connector arrangement at an activation of the first actuator arrangement. The first connector arrangement is arranged to apply a first output torque, or first output torsional moment, to the first deformable wing portion, or at the first deformable wing portion, at a supply of the first input torque to the connector arrangement, or at an activation of the first actuator arrangement. The first deformable wing portion is arranged to elastically deform at an application of the first output torque, or first output torsional moment, to the first deformable wing portion, or at an activation of the first actuator arrangement. The closed wing forms an outer support, or outer counter, at the wingtip arranged to counter the first output torque, or first output torsional moment.

It is understood that the first connector arrangement operationally connects the first actuator arrangement and the first deformable wing portion. It is further understood that the aircraft has an airframe, and the fuselage and the closed wing may form part of the airframe. It is further understood that the first connector arrangement may be arranged to apply the first output torque to the first deformable wing portion relative to the fuselage.

It is understood that the airframe may have an additional closed wing, an additional first actuator arrangement, and an additional first connector arrangement. The additional closed wing is coupled to the fuselage on the opposite side if the fuselage relative to the closed wing, and that the closed wing and the additional closed wing has a reflection symmetry relative to the centerline of the fuselage. The additional closed wing, additional first actuator arrangement, and additional first connector arrangement may have any of the features of and be arranged as the closed wing, first actuator arrangement, and first connector arrangement. Further components and features described in relation to the first wing may also be present in the additional first wing.

Throughout these specifications, that two elements "coupled" is understood as the two elements are either connected without another element between them or that the two elements are interconnected by one or more additional elements. That two elements "connected" is understood as the two elements being connected without another element between them.

A body may have a reference configuration and a current configuration, where a configuration is a set containing the positions of all particles of the body. A deformation is here understood as a transformation of a body from the reference configuration to the current configuration. An elastic deformation is understood to encompass structural deformations. It is understood to not encompasses mechanical deformations, for example by a mechanical joint or a kinematic pair with one or more degrees-of-freedom, such as deformations resulting from commonly used hinged control surfaces. If an object is elastically deformed by an application of a torque, it is understood that the torque causes it to assume a current configuration, and that it returns to its reference configuration if the application of the torque is discontinued.

It is specified that the first deformable wing portion is arranged to elastically deform at an application of the first output torque to the first deformable wing portion. It may also be elastically deformable due to external loads, for example during flight. It is understood that a counter to a torque may be a counter to the complete torque, or to a component of the complete torque.

It is understood that the closed wing defines a part of a loop. The closed wing and fuselage may form a complete loop, or the closed wing, fuselage, and vertical stabilizer may form a complete loop. The vertical stabilizer is further described below.

The proposed technology further allows for the aircraft to maneuver without articulated control surfaces, which contributes to a reduced drag. It further allows for the aircraft to be trimmed and the lift to be varied at a given speed. The latter allows for the aircraft to be adapted to different stages of a flight, for example takeoff, steady flight, and landing.

The first output torque may have, or be composed of, a first torque component and a second torque component. The second torque component may differ from the first torque component. Worded differently, the magnitude of the second torque component may differ from the magnitude of the first torque component, and/or the direction of the second torque component may differ from the direction of the first torque component. It is understood that the first torque component and the second torque component jointly form, or are components of, the first torque.

It is specified that the aircraft has a first actuator arrangement and a first connector arrangement. Worded differently, the aircraft may have a first actuator and connector arrangement that is arranged to apply a first output torque to the first deformable wing portion at an activation of the first actuator and connector arrangement. The first actuator and connector arrangement may be composed of, or comprise, the first actuator arrangement and the first connector arrangement. Worded differently, the first actuator arrangement and the first connector arrangement may jointly form a first actuator and connector arrangement. The first connector arrangement may in part form part of the first actuator arrangement, or vice vera. This means that first connector arrangement and the first actuator arrangement share components. The first wing section described below may in part form part of the first actuator arrangement, first connector arrangement, or first actuator and connector arrangement.

It is understood that the fuselage has a forward end, or nose, and a rear end, or tail. It is further understood that the fuselage may be a rigid structure, and that it may be arranged to not deform at the supply of the first input torque to the first connector arrangement, or at an application of the first output torque to the first deformable wing portion.

The aircraft may have a vertical stabilizer. The vertical stabilizer may form part of the airframe of the aircraft. It is understood that the vertical stabilizer may be connected to, or rigidly attached, to the fuselage. The vertical stabilizer may be located at the rear end of the fuselage. It may extend upwards relative to the fuselage. Worded differently, the vertical stabilizer may be a dorsal vertical stabilizer. The first deformable wing portion may be located between the fuselage and the wingtip, or between the vertical stabilizer and the wingtip. It is understood that the fuselage may be a rigid structure, and that it may be arranged to not deform at an application of the first output torque to the first deformable wing portion.

The closed wing may have a first wing section and a second wing section that are coupled at the wingtip. The first deformable wing portion is then located on, or forms part of, the first wing section. A wing section is understood to provide lift in flight. The combined first wing section and the second wing section may jointly provide the complete lift of the closed wing in flight.

The aspect ratio of a wing section is the length of the wing section divided by the average chord length of the wing section. A low aspect-ratio wing section is short and stubby when viewed from above, and a high aspect-ratio wing section is long and slender when viewed from above. The latter are more aerodynamically efficient, having less induced drag at subsonic speeds. The closed wing allows for high aspect-ratio wing with thin airfoil cross-sections. This in turn contributes to the wing sections being easier to elastically deform. The proposed technology allows for a deformable high-aspect ratio wing having a thin profile. The first wing section may be a high aspect-ratio wing section. This contributes to allow a deformation that twists the first deformable wing portion. For example, the aspect ratio may be greater than 5, or greater than 8, or greater than 10.

It is understood that each wing section has a root, or inner end, and an outer end. It is understood that the wing section extends from the root to the outer end. The outer end of respective wing section may be located at the wingtip. The first deformable wing portion may be located between the root and the outer end of the first wing section. The root of the first wing section and the root of the second wing section may be disconnected or spaced apart.

The closed wing may have an upright fin, or vertical fin, that interconnects the first wing section and the second wing at the wingtip. For example, the closed wing may be a box wing. Worded differently, the closed wing may have an upright, or vertical, fin that interconnects the outer end of the first wing section and the outer end of the second wing section. Alternatively, the first wing section and the second wing section may merge, or connect, at the wingtip, preferably in a smooth transition. Worded differently, the outer end of the first wing section and the outer end of the second wing sections may be joined together at the wingtip, or the complete closed wing may be composed of the first wing section and the second wing section. For example, the closed wing may be an annular box wing. That an object is composed of one or more of elements is understood as the complete object being made up of the elements.

The first wing section may be located below, or at a lower elevation than, the second wing section in level flight. More specifically, the root of the first wing section may be located below, or at a lower elevation than, the root of the second wing section in level flight. Worded differently, the first wing section may be a lower wing section and the second wing section may be an upper wing section. Alternatively, the first wing section may be located above, or at a higher elevation than, the second wing section in level flight. More specifically, the root of the first wing section may be located above, or at a higher elevation than, the root of the second wing section in level flight. Worded differently, the first wing section may be an upper wing section and the second wing section may be a lower wing section.

The first wing section may be in front of the second wing section in level flight. More specifically, the root of the first wing section may be in front of the root of the second wing section in level flight. Worded differently, the first wing section may be a forward wing section and the second wing section may be a rear wing section. Alternatively, the first wing section may be behind the second wing section in level flight. More specifically, the root of the first wing section may be behind the root of the second wing section in level flight. Worded differently, the first wing section may be a rear wing section and the second wing section may be a forward wing section.

Preferably, the forward wing section is a lower wing section, and the rear wing section is an upper wing section. Worded differently, the closed wing may be a joined wing. Additionally, the first wing section and the second wing section may merge at the wingtip, as described above. Worded differently, the closed wing may be an annular joined wing.

The root of the forward wing section may be coupled to the fuselage. The root of the forwards wing section may be connected to, or rigidly attached to, the fuselage. Alternatively, the root of the forward wing section may be rotationally coupled to the fuselage. For example, the aircraft may have a forward revolute joint that interconnects the first wing section, or more precisely the root of the first wing section, and the fuselage. It is understood that the forward revolute joint is arranged to allow the first wing section, or the root of the forward wing section, to rotate relative to the fuselage. The forward revolute joint may be arranged to carry the complete load on front wing section in steady flight.

The root of the rear wing section may be coupled to the fuselage via, or by, the vertical stabilizer. Worded differently, the root of the rear wing section may be connected to, or rigidly attached to the vertical stabilizer. Alternatively, it may be rotationally coupled to the vertical stabilizer. For example, the aircraft may have a rear revolute joint that interconnects the rear wing section, or more precisely the root of the rear wing section, and the vertical stabilizer. It is understood that the rear revolute joint is arranged to allow the rear wing section, or the root of the rear wing section, to rotate relative to the vertical stabilizer. The rear revolute joint may be arranged to carry the complete load on the rear wing section in steady flight.

Each of the first wing section and the second wing section may have a leading edge and a trailing edge. It is understood that the leading edge and the trailing edge of the first deformable wing portion form part of the corresponding edges of the first wing section, which in turn form part of the corresponding edges of the closed wing.

The first actuator arrangement may be separate from, or spaced apart, from the first deformable wing portion, or from the closed wing. The first actuator arrangement may be located outside, or distant from, the first wing section or the closed wing. The first actuator arrangement may be located within the fuselage and/or in the vertical stabilizer.

It is understood that the first actuator arrangement may comprise a first actuator. The first actuator is understood as the component of the first actuator arrangement that produces a displacement and/or rotation that the first actuator arrangement converts to the first input torque. The first actuator may generate the displacement and/or rotation at the activation of the first actuator arrangement. The first actuator may be separate from, or spaced apart, from the first deformable wing portion, from the first wing section, or from the closed wing. The first actuator may be located outside, or distant from, the first wing section or the closed wing. The first actuator may be located within the fuselage and/or in the vertical stabilizer.

The first actuator arrangement may be coupled to the fuselage, and the fuselage may be arranged to form a counter to the first input torque. More specifically, the first actuator arrangement may be connected to the fuselage and/or the horizontal stabilizer, and the fuselage and/or the horizontal stabilizer may be arranged to form a counter to the first input torque.

It is specified above that the aircraft may have a first actuator and connector arrangement that is arranged to apply a first output torque to the first deformable wing portion at an activation of the first actuator and connector arrangement. The first actuator and connector arrangement may be coupled to the fuselage, and the fuselage may be arranged to form a counter to the first input torque. More specifically, the first actuator and connector arrangement may be connected to the fuselage and/or the horizontal stabilizer, and the fuselage and/or the horizontal stabilizer may be arranged to form a counter to the first input torque.

It is specified below that the first connector arrangement may be a first shaft arrangement. For example, the first actuator arrangement may be a rotary actuator, such as a torque motor, having a rotor connected to the first shaft arrangement. Alternatively, the first actuator arrangement may comprise a first actuator and a first shaft connector that operationally connects the first actuator and the first shaft arrangement. For example, the first actuator may be a linear actuator, such as a hydraulic cylinder, and the first shaft connector may be a lever connected to the first shaft arrangement, or the first actuator arrangement may be a rotary actuator, such as a torque motor, having a rotor, and the first shaft connector may be, or comprise, a gear set that connects the rotor to the first shaft arrangement.

It is specified that the first actuator arrangement is arranged to supply a first input torque to the first connector arrangement at an activation of the first actuator arrangement, and that the first connector arrangement is arranged to apply a first output torque to the first deformable wing portion at the supply of the first input torque to the connector arrangement. The first connector arrangement may be, or comprise, a first shaft arrangement. The first shaft arrangement comprises a first shaft that is coupled to, or connected to, the first deformable wing portion. The first shaft may extend along a direction from the root of the first wing section to the outer end of the wing section. The first shaft may extend at least partly across the first deformable wing portion. It is understood that the first shaft may be centered on a first shaft axis. It is understood that the first shaft may be straight. It is further understood that the first shaft may extend within the first wing section.

The first shaft may be connected to the first actuator arrangement. This means that the first output torque may be the same as the first input torque. The first shaft may be connected to the first actuator arrangement within the fuselage and/or the vertical stabilizer. The first shaft may extend from the first wing section at the root of the first wing section. The first shaft may extend into the fuselage and/or the vertical stabilizer. The first shaft may be connected directly to the first actuator arrangement. Worded differently, the first actuator arrangement may be arranged to supply the first input torque directly to the first shaft. For example, first actuator arrangement may be a torque motor having a rotor connected to the first shaft, or the first actuator may be a hydraulic cylinder and the first shaft connector may be a lever connected to the first shaft, as outlined above for the first shaft arrangement. The first shaft may be arranged to transfer the complete first output torque to the first deformable wing portion.

Alternatively to the first shaft being connected to the first actuator arrangement, the first shaft arrangement may comprise a second shaft that is connected to the first actuator arrangement and coupled to, or connected to, the first shaft. It is understood that the second shaft and the first shaft are coupled in series relative to the first actuator arrangement. It is understood that the second shaft may be straight and centered on a second shaft axis. It is further understood that the complete first shaft may extend within the first wing section, and that the second shaft may extend within the first wing section. It is specified that the first actuator arrangement is separate from the closed wing. The second shaft may be connected to the first actuator arrangement within the fuselage and/or the vertical stabilizer. The second shaft may extend from the first wing section at the root of the first wing section. The second shaft may extend into the fuselage and/or the vertical stabilizer. The second shaft may be connected directly to the first actuator arrangement. Worded differently, the first actuator arrangement may be arranged to supply the first input torque directly to the second shaft. For example, first actuator arrangement may be a torque motor having a rotor connected to the second shaft, or the first actuator may be a hydraulic cylinder and the first shaft connector may be a lever connected to the second shaft, as outlined above for the first shaft arrangement.

The first shaft may be flexible. Similarly, the second shaft may be flexible. This way, the shafts are arranged to accommodate for load deformations of the closed wing, or more specifically the first wing section, in flight.

Any of the first shaft and the second shaft may be a fiber reinforced structure. More specifically, they may be a carbon-fiber reinforced structure. Worded differently, any of the first shaft and the second shaft may be composed of a fiber reinforced polymer composite. More specifically, they may be composed of a carbon-fiber reinforced polymer composite.

It is specified the second shaft is coupled to the first shaft. The second shaft and the first shaft may be coupled to one another inside the first wing section. The first shaft arrangement may comprise an inter-shaft connector that connects the second shaft and the first shaft. It is understood that that the inter-shaft connector is located within the first wing section.

The first shaft arrangement, or the inter-shaft connector, may comprise one or more additional shafts, wherein the second shaft is coupled to the first shaft via the one or more additional shafts.

The inter-shaft connector may be arranged to transfer the first input torque, or a component of the first input torque, from the second shaft to the first shaft. This means that the first output torque is the same, or essentially the same, as the first input torque, or the component of the first input torque. For example, the inter-shaft connector may be, or comprise, a universal joint, wherein the second shaft is coupled to the first shaft via the universal joint. This way, the first shaft arrangement is arranged to accommodate for load deformations of the closed wing, or more specifically of the first wing section, in flight.

Alternatively to the inter-shaft connector being arranged to transfer the first input torque from the second shaft to the first shaft, the inter-shaft connector may be arranged to convert the first input torque, or a component of the first input torque, to the first output torque, or to the first torque component. For example, the inter-shaft connector may be, or comprise, a gear arrangement, wherein the second shaft is coupled to the first shaft via the gear arrangement. The inter-shaft connector may be arranged to convert the first input torque, or a component of the first input torque, to the first output torque, or to the first torque component, at a mechanical advantage that is less than one. This means that the first output torque is smaller than the first input torque. Alternatively, the inter-shaft connector may be arranged to convert the first input torque, or a component of the first input torque, to the first output torque, or to the first torque component, at a mechanical advantage that is greater than one. This means that the first output torque is greater than the first input torque.

As described above, the inter-shaft connector may be arranged to convert the first input torque, or a component of the first input torque, to the first output torque, or to the first torque component. The inter-shaft connector may generate a counter torque acting on the complete inter-shaft connector at a conversion of the first input torque to the first output torque, or to the first torque component. Typically, the counter torque corresponds to the difference between the first input torque and the first output torque. The inter-shaft connector may be connected to the first wing section, or to the static wing portion described below, and arranged to transfer the counter torque to the first wing section, or to the static wing portion. The first wing section, or the static wing portion, may form a support at the inter-shaft connector arranged to counter the counter torque. The inter-shaft connector may be connected to the first wing section closer to the leading edge of the first wing section than to the trailing edge of the first wing section. The inter-shaft connector may be spaced apart from the first deformable wing portion. Worded differently, the first deformable wing portion may be arranged to not elastically deform at a transfer of the counter torque to the first wing section. For example, the gear arrangement may comprise a single-stage gear and a shaft support, wherein the second shaft is coupled to the first shaft via the single-stage gear, the shaft support fixes the position of the second shaft and the first shaft at the single-stage gear, and the shaft support is attached to the first wing section. The inter-shaft connector may be located in and/or attached to the static wing portion. This means the counter torque will not deform the first wing section at an application of the first output torque to the first deformable wing portion.

The inter-shaft connector may be arranged to rotate the first shaft in the same rotational direction as the second shaft. For example, the inter-shaft connector may comprise a universal joint or a two-stage gear, wherein the second shaft is coupled to the first shaft via the universal joint or the two-stage gear. In combination with the abovementioned torque conversion, this has the advantage of a smaller counter torque from the inter-shaft connector.

The second shaft and the first shaft may be parallel, or aligned. Worded differently, the second shaft and the first shaft may extend in the same direction, or the first shaft axis and the second shaft axis may be parallel, or aligned. For example, the inter-shaft connector may comprise a universal joint, as described above.

Alternatively, the second shaft and the first shaft may be inclined, or angled, relative to one another. Worded differently, the second shaft and the first shaft may extend in different directions, or the first shaft axis and the second shaft axis may be inclined, or angled, relative to one another. For example, the inter-shaft connector may comprise a universal joint, as described above. Alternatively, it may comprise a gear arrangement, as described above, and the gear arrangement has a bevel gear with an input axis parallel with the second shaft and an output axis parallel with the first shaft.

The second shaft may extend along a direction from the root of the first wing section to the outer end of the wing section. This is advantageous in combination with the second shaft and the first shaft being parallel. Alternatively, the second shaft may extend along a direction from the root of the first wing section to the leading edge of the first wing section. This is advantageous in combination with second shaft and the first shaft being inclined.

The first connector arrangement may comprise a first wing connector that is connected to, or attached to, the first deformable wing portion. It is understood that the first connector arrangement is arranged to apply the first output torque, or to the first torque component, to the first deformable wing portion via the first wing connector. The first shaft may be connected to, or attached to, the first wing connector. The first wing connector as such may form, or be, a rigid structure.

It is specified that the first connector arrangement is arranged to apply a first output torque to the first deformable wing portion at the supply of the first input torque to the connector arrangement, and that the first output torque may have, or be composed of, a first torque component and a second torque component. The first torque component and the second torque component may be applied to the first deformable wing portion, and the second torque component may be applied closer to the fuselage and/or horizontal stabilizer, or closer to the root of the first wing section, than the first torque component.

It is further specified that the first connector arrangement may be a first shaft arrangement, that the first shaft arrangement may comprises a first shaft that is coupled to the first deformable wing portion, and that the first shaft arrangement may comprise a second shaft that is connected to the first actuator arrangement and to the first shaft. The first shaft may be arranged to transfer the complete first output torque to the first deformable wing portion. Alternatively, the first shaft may be arranged to transfer the first torque component to the first deformable wing portion, and the second shaft may be arranged to transfer the second torque component to the first deformable wing portion.

It is specified that the first connector arrangement may comprise a first wing connector that is connected to the first deformable wing portion, wherein the first connector arrangement is arranged to apply the first output torque to the first deformable wing portion via the first wing connector. The first connector arrangement may be arranged to apply the complete first output torque to the first deformable wing portion via the first wing connector. Alternatively, the first connector arrangement may further comprise a second wing connector that is connected to the first deformable wing portion, wherein the first connector arrangement is arranged to apply the first torque component to the first deformable wing portion via the first wing connector and to apply the second torque component to the first deformable wing portion via the second wing connector. Worded differently, the first connector arrangement may comprise a first wing connector and a second wing connector that are connected to the first deformable wing portion, wherein the first connector arrangement is arranged to apply the first output torque to the first deformable wing portion via the first wing connector and the second wing connector, and the first output torque is divided in an first torque component applied via the first wing connector and a second torque applied via the second wing connector. The first wing connector may connect the abovementioned first shaft and the first deformable wing portion, and the second wing connector may connect the abovementioned second shaft and the first deformable wing portion. The second wing connector may be located between the first wing connector and the root of the first wing section.

The first shaft may be connected to, or attached to, the first wing connector. The first wing connector as such may form, or be, a rigid structure. The first wing connector may rigidly connect the first shaft to the first deformable wing portion. Alternatively, the first wing connector may comprise a plurality of first fasteners, wherein each first fastener is connected to, or attached to, the first deformable wing portion, the first shaft is connected to, or attached to, each first fastener, and the first fasteners are spaced apart across the first deformable wing portion, or along the first shaft. Worded differently, the first fasteners may individually and independently connect the first shaft to the first deformable wing portion. It is understood that the first fasteners are arranged to jointly transfer the first output torque, or the first torque component, to the first deformable wing portion. Each first fastener may form, or be, a rigid structure. Each first fastener may rigidly connect the first shaft to the first deformable wing portion. That the first fasteners are spaced apart across the first deformable wing portion, or along the first shaft, allows for the first shaft to twist between the first fasteners, which contributes to even out the application of the first output torque, or first torque component, across the first deformable wing portion.

Similarly, the second shaft may be connected to, or attached to, the second wing connector. The second wing connector as such may form, or be, a rigid structure. The second wing connector may rigidly connect the second shaft to the first deformable wing portion. Alternatively, the second wing connector may comprise a plurality of second fasteners, wherein each second fastener is connected to, or attached to, the first deformable wing portion, the second shaft is connected to, or attached to, each second fastener, and the second fasteners are spaced apart across the first deformable wing portion, or along the second shaft. Worded differently, the second fasteners may individually and independently connect the second shaft to the first deformable wing portion. It is understood that the second fasteners are arranged to jointly transfer the second torque component to the first deformable wing portion. Each second fastener may form, or be, a rigid structure. Each second fastener may rigidly connect the second shaft to the first deformable wing portion. That the second fasteners are spaced apart across the first deformable wing portion, or along the second shaft, allows for the second shaft to twist between the second fasteners, which contributes to even out the application of the second torque component across the first deformable wing portion.

It is understood that the first deformable wing portion may have an airfoil cross-section. Each of the first fasteners and/or the second fasteners may be elongated and aligned with the airfoil cross-section, or with the intended direction of flight. Alternatively, each of the first fasteners and/or the second fasteners may be elongated and transverse, or perpendicular to, the first shaft and/or the second shaft.

It is specified above that the first wing section and the second wing section may merge at the wingtip. The leading edges of the first wing section and the second wing section then jointly forms an uninterrupted leading edge of the closed wing. Similarly, the trailing edges of the first wing section and the second wing section then jointly forms an uninterrupted trailing edge of the closed wing.

Each of the first wing section and the second wing section may have an upper surface and a lower surface. It is understood that the upper surface and the lower surface are outer surfaces. For each of the wing sections, the upper surface and the lower surface may be joined at the leading edge and the trailing edge of the wing section. Worded differently, of the upper surface and the lower surface of each wing section may extend between the leading edge and the trailing edge of the wing section.

It is specified above that the first wing section and the second wing section may merge at the wingtip. The upper surface of the first wing section may then connect to the lower surface of the second wing section at the wingtip. Similarly, the lower surface of the first wing section may then connect to the upper surface of the second wing section at the wingtip. The upper surfaces and the lower surfaces of the first wing section and the second wing section may then jointly form an outer wing surface that extends between the root of the first wing section and the root of the second wing section.

Any of the abovementioned upper surfaces and lower surfaces may be unbroken. This means that there are no structural holes in the surfaces. Any of the abovementioned upper surfaces and lower surfaces may be continuous, or smooth. This means that there are no gaps, cuts, or other sharp features, in the surface. For example, the surfaces cannot be defined by a pivotable flap, pivotable ailerons, or pivotable elevator.

The complete closed wing, the complete first wing section, or the complete first deformable wing portion may be a unitary structure, or a non-articulated structure, which means that closed wing, the first wing section, or the first deformable wing portion is not composed of several components that can move relative to one another without the deforming. Worded differently, the closed wing, the first wing section, or the first deformable wing portion may form a single continuous structure.

The closed wing may have a skin. The structural strength of the skin may be greater at the leading edge than at the trailing edge of the closed wing. The skin of the closed wing may be arranged to carry the complete load on closed wing in steady flight. The skin of the closed wing may form, or define, the abovementioned leading edge, trailing, edge, upper surface, and lower surface of the closed wing. The skin of the closed wing may be a monocoque skin, which means that it is arranged to carry all tensile forces and compressive forces on the closed wing in flight within the skin of the closed wing.

The first wing section may have a first skin. The structural strength of the first skin may be greater at the leading edge than at the trailing edge of the first wing section. The skin of the first wing section may be arranged to carry the complete load on first wing section in steady flight. Similarly, the second wing section may have a second skin. The structural strength of the second skin may be greater at the leading edge than at the trailing edge of any of the wing sections. The skin of any of the wing sections may be arranged to carry the complete load on the wing section in steady flight. The skin of any of the wing sections may form, or define, the abovementioned leading edge, trailing, edge, upper surface, and lower surface of the wing section. It is specified above that the first wing section and the second wing section may merge at the wingtip. The first skin and the second skin may then jointly form a combined skin of the closed wing. The first skin may be a monocoque skin, which means that it is arranged to carry all tensile forces and compressive forces on the first wing in flight within the first skin. Similarly, the second skin may be a monocoque skin, which means that it is arranged to carry all tensile forces and compressive forces on the first wing in flight within the second skin.

The skin of the first wing section may defined the abovementioned upper surface and lower surface of the first wing section. Similarly, the skin of the first wing section may defined the abovementioned leading edge and trailing edge of the first wing section.

The first deformable wing portion may have a skin. The structural strength of the skin may be greater at the leading edge than at the trailing edge of the first deformable wing portion. The skin of the first deformable wing portion may be arranged to carry the complete load on first deformable wing portion in steady flight. The skin of the first deformable wing portion may partly form, or define, the abovementioned leading edge, trailing, edge, upper surface, and lower surface of the first deformable wing portion. It is understood that the skin of the first deformable wing portion may form part of the skin of the first wing section. The skin of the first deformable wing portion may be a monocoque skin, which means that it is arranged to carry all tensile forces and compressive forces on the first deformable wing portion in flight within the skin of the first deformable wing portion. The skin of the deformable wing portion may be arranged to elastically deform at an application of the first output torque to the first deformable wing portion.

Any of the abovementioned skins may be a unitary structure, or a single structure. This means that it is not composed of separable elements or comprises any articulated elements. The skins may be continuous, or smooth. This means that there are no gaps, cuts, or other sharp features, in the skin. Any of the abovementioned skins may be hollow.

Any of the abovementioned skins may be a fiber reinforced structure. More specifically, the skin may be a carbon-fiber reinforced structure. The skin may be composed of, or primarily composed of, fiber reinforced polymer or fiber reinforced plastic. For example, the complete skin may be composed of the fiber reinforced polymer, or the skin may be composed of the fiber reinforced polymer to more than 90% by volume. Preferably, the polymer is a cured thermosetting resin. Preferably, the fibers are carbon fibers. The carbon fibers may be in the form of woven sheets of carbon fibers. The sheets may be overlapping and form a layered structure. This allows for the thickness of the skin to vary both in a direction from the leading edge to the trailing edge and in a direction from the root of the first wing section to the outer end of the first wing section. The sheets may be aligned with the abovementioned upper surface and/or lower surface. The sheets may jointly cross the leading edge and the trailing edge. The fibre reinforced polymer may have a Young's modulus of 200-500 GPa.

It is understood that the first deformable wing portion may extend between the leading edge and the trailing edge of the first wing section. Worded differently, it may extend across the complete width of the first wing section at the first deformable wing portion. It is also understood that the leading edge and the trailing edge of the first wing section may form part of the first deformable wing portion. It is further understood that the upper surface and the lower surface of the first wing section may at least in part be defined by the first deformable wing portion.

The first deformable wing portion may extend from the fuselage to the wingtip. Worded differently, the first deformable wing portion may extend from the root to the outer end of the first wing section, or the complete first wing section may be the first deformable wing portion.

Alternatively, the first deformable wing portion may be spaced apart from the root of the first wing section. This means that the first wing section does not deform at the root at an activation of the first actuator arrangement. Worded differently, the first deformable wing portion may be spaced apart from the fuselage, or from the vertical stabilizer. The first wing section may have an articulated control surface, such as a pivotal flap, located between the first deformable wing portion and the root of the first wing section.

The first deformable wing portion may be spaced apart from the outer end of the first wing section. This means that the first wing section does not deform at the outer end at an activation of the first actuator arrangement. Worded differently, the first deformable wing portion may be spaced apart from the wingtip of the closed wing. The first wing section may have an articulated control surface, such as a pivotal aileron, located between the first deformable wing portion and the outer end of the first wing section.

The center of the first deformable wing portion may be located closer to the outer end of the first wing section than to the root of the first wing section. Worded differently, the center of the first deformable wing portion may be located closer to the wingtip than to the fuselage, or to vertical stabilizer. If the first wing section is a forward wing section, the first deformable wing portion may be arranged to function as an aileron. Alternatively, the center of the first deformable wing portion may be located closer to the root of the first wing section than to the outer end of the first wing section. Worded differently, the center of the first deformable wing portion may be located closer to the fuselage, or to vertical stabilizer, than to the wingtip. If the first deformable wing portion is a rear wing section, the first deformable wing portion may be arranged to function as an elevator. Here, the center may be the centroid or center of gravity of the first deformable wing portion.

It is understood that the first deformable wing portion may have an airfoil cross-section, and that the first airfoil cross-section may have, or define, a chord and a chord length. The chord corresponds to a straight line between the leading edge and the trailing edge, and the chord length corresponds to the distance between the leading edge and the trailing edge of the airfoil cross-section, or the length of the chord. The upper surface of the first deformable wing portion may have an upper curvature across the wing portion. Similarly, the lower surface of the first deformable wing portion may have a lower curvature across the wing portion. The upper surface and the lower surface of the first wing section may define a camber, or asymmetry, across the first deformable wing portion. The camber is understood to extend from the leading edge to the trailing edge of the first wing section. The first airfoil cross-section may define, or have, a camber line. The camber line corresponds to a curve that traces the midway between the upper surface and the lower surface in the airfoil cross-section. The angle of attack is the angle between the chord of an airfoil cross-section and the intended direction of flight.

It is specified that the first connector arrangement is arranged to apply a first output torque to the first deformable wing portion at the supply of the first input torque to the connector arrangement, and that the first deformable wing portion is arranged to elastically deform at an application of the first output torque to the first deformable wing portion. It is understood that the first deformable wing portion has a geometry, or shape, and the first deformable wing portion may be arranged to change its geometry at an application of the first output torque to the first deformable wing portion.

It is understood that the deformation of the first deformable wing portion may vary across the first wing potion. More specifically, the deformation of the first deformable wing portion may vary along a direction from the leading edge to the trailing edge of the first wing section and/or along a direction from the root to the outer end of the first wing section. It is understood that the deformation of the first deformable wing portion may change gradually across the first deformable wing portion.

The first deformable wing portion may be arranged to change the camber of the first deformable wing portion at an application of the first output torque to the first deformable wing portion. More specifically, the first deformable wing portion may be arranged to change the shape of the camber line of the airfoil cross-section of the first deformable wing portion at an application of the first output torque to the first deformable wing portion. More specifically, the first deformable wing portion may be arranged to maintain the shape of the camber line at the leading edge of the first wing section and change the shape of the camber line at the trailing edge of the first wing section at an application of the first output torque to the first deformable wing portion. Worded differently, the first deformable wing portion may be arranged to maintain its shape at the leading edge and to elastically deform at the trailing edge. This allows for the first deformable wing portion to be used as a commonly used aileron or elevator.

The first deformable wing portion may be arranged to change the shape of camber line of the airfoil cross-section and to vary the orientation of the camber line of the airfoil cross section at an application of the first output torque to the first deformable wing portion. The first deformable wing portion may be arranged to change the angle of attack of the airfoil cross-section at an application of the first output torque to the first deformable wing portion at an application of the first output torque to the first deformable wing portion. The first deformable wing portion may be arranged to simultaneously change the shape of the camber line of the airfoil cross-section at an application of the first output torque to the first deformable wing portion.

Alternatively, first deformable wing portion may be arranged to maintain the shape of camber line of the airfoil cross-section and to vary the orientation of the camber line of the airfoil cross section at an application of the first output torque to the first deformable wing portion. The first deformable wing portion may be arranged to change the angle of attack of the airfoil cross-section at an application of the first output torque to the first deformable wing portion. It may be arranged to simultaneously maintain the shape of the camber line of the airfoil cross-section.

The first deformable wing portion may be arranged to twist relative to the fuselage and/or vertical stabilizer and the wingtip, or relative to the root and the outer end of the first wing section, at an application of the first output torque to the first deformable wing portion. More specifically, the first deformable wing portion may be arranged to twist around a first twist axis at an application of the first output torque to the first deformable wing portion. The first twist axis may extend between the fuselage and the wingtip, or between to the root and outer end of the first wing section. The first twist axis may be parallel with, aligned with, the first shaft or the first shaft axis described above. The first twist axis may be centered on the first shaft or the first shaft axis. Worded differently, the first deformable wing portion may be arranged to twist around the first shaft or the first shaft axis. The twist axis or may be located closer to the leading edge than to the trailing edge. This means that the position of the trailing edge will shift more than the position of the leading edge at an application of the first output torque to the first deformable wing portion. The first deformable wing portion may be arranged to twist in opposite directions at a change in direction of the first output torque. This allows for the first deformable wing portion to be used as a commonly used aileron or elevator.

It is specified that the first connector arrangement operationally connects the first actuator arrangement and the first deformable wing portion. If is further specified above that the first connector arrangement may comprise a first wing connector that is connected to the first deformable wing portion, and that the first wing connector may comprise a plurality of first fasteners.

The first connector arrangement may be connected to the first deformable wing portion at the upper surface and disconnected from the first deformable wing portion at the lower surface, or vice versa. For example, the abovementioned first wing connector may be connected to, or attached to, the first deformable wing portion at the upper surface and disconnected from the first deformable wing portion at the lower surface, or vice versa. Worded differently, the first wing connector may contact the first deformable wing portion at the upper surface and be spaced apart from the first deformable wing portion at the lower surface.

The first wing connector may be spaced apart from the leading edge. The first wing connector may connect to the first deformable wing portion at the trailing edge, or closer to the trailing edge then to the leading edge. Worded differently, the first wing connector may be located closer to the trailing edge than to the leading edge. For example, the first shaft of the abovementioned first shaft arrangement may be located closer to the trailing edge than to the leading edge at the first deformable wing portion. The features described here allows for the first deformable wing portion to maintain the camber at the leading edge and change the camber at the trailing edge, as described above.

The first wing connector may be arranged to interact directly with the first deformable wing portion at the upper surface and change the upper curvature of the first deformable wing portion at the activation of the first actuator arrangement. The first deformable wing portion may be arranged to change the chord length of the airfoil cross-section of the first deformable wing portion at the change of the upper curvature, and to the change the lower curvature of the first deformable wing portion at a change of the chord length. Alternatively, the first wing connector may be arranged to interact directly with the first deformable wing portion at the lower surface and change the lower curvature of the first deformable wing portion at the activation of the first actuator. The first deformable wing portion may be arranged to change the chord length of the airfoil cross-section of the first deformable wing portion at the change of the lower curvature, and to the change the upper curvature of the first deformable wing portion at a change of the chord length.

Alternatively to the first connector arrangement being connected to the first deformable wing portion at the upper surface and disconnected from the first deformable wing portion at the lower surface, or vice versa, the first connector arrangement may be connected to the first deformable wing portion at both the upper surface and the lower surface. For example, the first wing connector may be connected to, or attached to, the first deformable wing portion at the upper surface and the lower surface. The first wing connector may be attached to the first deformable wing portion closer to the leading edge than to the trailing edge, or at the leading edge and/or the trailing edge. For example, the first shaft may be located closer to the leading edge than to the trailing edge at the first deformable wing portion. The features described here allows for the first deformable wing portion to maintain the shape of the camber line of the airfoil cross-section of the first deformable wing portion and to vary the orientation of the camber line of the airfoil cross-section, or for the first deformable wing portion to twist relative to the fuselage and the wingtip, as described above.

The first deformable wing portion may extend along the complete length of the first wing section from the root to the outer end of the first wing section. Worded differently, the first deformable wing portion may form, or constitute the first wing section from the root to the outer end of the first wing section.

The first deformable wing portion may be located at the root of the first wing section, or at the fuselage or vertical stabilizer. Alternatively, the first deformable wing portion may be separate from the root of the first wing section.

It is specified that the closed wing may have a first wing section and that the first deformable wing portion is then located on the first wing section. The closed wing may have a static wing portion located on the first wing section. The static wing portion may be arranged to not deform, or maintain its shape, at an application of the first output torque to the first deformable wing portion. The static wing portion may be located between the root of the first wing section and the first deformable wing portion. It is understood that the static wing portion may extend between the leading edge and the trailing edge of the first wing section. It is also understood that the leading edge and the trailing edge of the first wing section may form part of the static wing portion. It is further understood that the upper surface and the lower surface of the first wing section may in part be defined by the static wing portion.

The static wing portion may be located at, or connected to, the root of the first wing section. The root of the first wing section may be a rigid structure. Worded differently, the static wing portion may form the root of the first wing section, or the root of the first section may be a static wing portion arranged to not deform, or maintain its shape, at an application of the first output torque to the first deformable wing portion. The root of the first wing section may form part of the first actuator arrangement and/or the first connector arrangement. More generally, the root of the first wing section may form part of the first actuator and connector arrangement.

The static wing portion may be fixed to, or rigidly attached to, the fuselage or vertical stabilizer. This means that the orientation and position of the root of the first wing section cannot change relative to fuselage or vertical stabilizer. Alternatively, the static wing portion may be rotatably coupled to the fuselage or vertical stabilizer, for example by the revolute joint described below. The first deformable wing portion may be connected to the static wing portion. More specifically, the first deformable wing portion may be fixed to, or rigidly attached to, the static wing portion. Alternatively, the first deformable wing portion may be rotatably coupled to the static wing portion, for example by the revolute joint described below.

The first wing section may have an articulated control surface, such as a pivotal flap or a pivotal aileron, located on, or at, the static wing portion.

The root of the first wing section may be connected to the fuselage or vertical stabilizer. This means that there are no additional elements between the root of the first wing section and the fuselage or vertical stabilizer. More specifically, the root of the first wing section may be fixed to, or rigidly attached to, the fuselage or vertical stabilizer. This means that the orientation and position of the root of the first wing section cannot change relative to fuselage or vertical stabilizer. It is specified that the closed wing forms an outer support at the wingtip arranged to counter the first output torque. Similarly, the fuselage or vertical stabilizer may form an inner support, or inner counter, arranged to counter the first output torque. It is then understood that that the outer support and the inner support may be arranged to jointly counter the first output torque.

The root of the first wing section may be coupled to the fuselage or vertical stabilizer. The root of the first wing section may be rotatably coupled to the fuselage or vertical stabilizer, for example by the revolute joint described below. This means that the root of the first wing section can rotate relative to the fuselage or vertical stabilizer. Worded differently, the root of the first wing section may be rotatable relative to the fuselage and/or the vertical stabilizer. Additionally, the root of the first wing section may have a fixed position relative to the fuselage and/or the vertical stabilizer. For example, the position of the revolute joint may be fixed relative to the root of the first wing section and the fuselage.

The first actuator arrangement and/or first connector arrangement may be arranged to change the angle-of-attack of the first wing section at the root of the first wing section, or of the first deformable wing portion at the static wing portion, at the supply of the first input torque to the first connector arrangement, or at an application of the first output torque to the first deformable wing portion.

The aircraft may comprise a revolute joint that is connected to the root of the first wing section and to the fuselage or vertical stabilizer. It is understood that the revolute joint rotationally supports the root of the first wing section relative to fuselage or vertical stabilizer. Worded differently, it is arranged to allow the root of the first wing section to rotate relative to the fuselage or vertical stabilizer. The revolute joint may be arranged to carry the complete load on the first wing section in flight. The revolute joint may be located closer to the leading edge of the first wing section than to the trailing edge of the first wing section. The revolute joint may have, or define, a rotational axis around which the first wing section, or the root of the first wing section, can rotate at the fuselage or vertical stabilizer. The rotational axis may be transverse to, or perpendicular to, the intended direction of flight. The revolute joint may have a rotary part attached to, or fixed to, the first wing section, or to the root of the first wing section, and a cooperating static part attached to, or fixed to, the fuselage or vertical stabilizer. For example, the revolute joint may be a pin joint.

Alternatively, the aircraft may comprise a revolute joint that is connected to the first deformable wing portion and to the static wing portion. It is understood that the revolute joint rotationally supports the deformable wing portion relative to the static wing portion. Worded differently, it is arranged to allow the first deformable wing portion to rotate relative to the static wing portion. The revolute joint may be arranged to carry the complete load on the first deformable wing portion in flight. The revolute joint may be located closer to the leading edge at the first deformable wing portion than to the trailing edge at the first deformable wing portion. The revolute joint may have, or define, a rotational axis around which the first deformable wing portion can rotate at the static wing section. The rotational axis may be transverse to, or perpendicular to, the intended direction of flight. The revolute joint may have a rotary part attached to, or fixed to, the first deformable wing portion and a cooperating static part attached to, or fixed to, the static wing portion. For example, the revolute joint may be a pin joint.

The first connector arrangement may be arranged to change the angle-of-attack of the first wing section at the root of the first wing section, or of the first deformable wing portion at the static wing portion, at the supply of the first input torque to first connector.

The revolute joint may form part of the first connector arrangement. Worded differently, the first connector arrangement may comprise the revolute joint. The root of the first wing section may form part of the first connector arrangement. Worded differently, the first connector arrangement may comprise the root of the first wing section.

It is specified that the first actuator arrangement may comprise a first actuator, and that the first actuator may be located within the fuselage and/or in the vertical stabilizer. The first actuator may be coupled to, or connected to, the rotary part of the revolute joint. The first connector arrangement may be arranged to apply, or transfer, the first output torque to the first deformable wing portion via the revolute-joint, or via the rotary part of the revolute joint, and the root of the first wing portion. For example, the first actuator arrangement may be a rotary actuator, such as a torque motor, having a rotor connected directly to the rotary part. Alternatively, the first connector arrangement may comprise a connector shaft that is connected to the rotary part of the revolute joint, and the first actuator arrangement may comprise a first actuator and a first shaft connector, wherein the first shaft connector connects the first actuator and the connector shaft. For example, the first actuator may be a linear actuator, such as hydraulic cylinder, and the first shaft connector may be a lever that connects the linear actuator to the connector shaft.

Alternatively, the revolute joint may form part of the first actuator arrangement. Worded differently, the first actuator arrangement may comprise the revolute joint. The root of the first wing section may form part of the first actuator arrangement. Worded differently, the first actuator arrangement may comprise the root of the first wing section. The root of the first wing section may also form part of the first connector arrangement. Worded differently, the first connector arrangement may comprise the root of the first wing section.

It is specified that the first actuator arrangement is arranged to supply a first input torque to the first connector arrangement at an activation of the first actuator arrangement. The first actuator arrangement may be arranged to supply the first input torque to the first connector arrangement via the root of the first wing portion, and the first connector arrangement may be arranged to receive the first input torque from the first actuator arrangement via the root of the first wing portion.

It is specified that the first actuator arrangement may comprise a first actuator, and that the first actuator may be located within the fuselage and/or in the vertical stabilizer. The first actuator arrangement may comprise a first root connector, wherein the first root connector connects the first actuator to the root of the first wing section, the first root connector is spaced apart from the revolute joint, and the root of the first wing section is arranged to form a lever between the revolute joint and the first root connector. The first actuator arrangement may be arranged to move the first root connector tangential to the rotational axis of the revolute joint. The first root connector may be located between the revolute joint and the trailing edge of the first wing section. The first root connector may be located closer to the trailing edge of the first wing section than to the leading edge of the first wing section. The root of the first wing section may be arranged to function as a lever to form the first input torque in cooperation with the first actuator, or to form the first input torque at a displacement and/or rotation produced by the first actuator. The first actuator may be a linear actuator, such as a hydraulic cylinder, and the first root connector may be a beam connected to the root of the first wing section. It is understood that the first output torque is generated by the cooperating first actuator, first root connector, root, and revolute joint at an activation of the first actuator.

It is specified that the first deformable wing portion may extend along the complete length of the first wing section from the root to the outer end of the first wing section. This means that the root of the first wing section may transfer the first input torque to the first deformable wing portion directly as the first output torque. It is specified that the closed wing may have a static wing portion located on the first wing section, and that that the static wing portion may be connected to the root of the first wing section. The static wing portion may form part of the first connector arrangement.

The closed wing may further have a second deformable wing portion, and the fixed-wing aircraft may further comprise: a second actuator arrangement, and a second connector arrangement. The second actuator arrangement is arranged to supply a second input torque, or second input torsional moment, to the second connector arrangement at an activation of the second actuator arrangement. The second connector arrangement is arranged to apply a second output torque, or second output torsional moment, to the second deformable wing portion at a supply of the second input torque to the second connector arrangement, or at an activation of the second actuator arrangement. The second deformable wing portion is arranged to elastically deform at an application of a second output torque, or second output torsional moment, to the second deformable wing portion, or at an activation of the second actuator arrangement. The outer support, or outer counter, at the wingtip that is arranged to counter the second output torque, or second output torsional moment.

It is understood that the outer support is arranged to counter the combined, or both the, first output torque and second output torque. It is specified that the root of the first wing section may be connected to the fuselage or vertical stabilizer, and that the fuselage or vertical stabilizer may form an inner support arranged to counter the first output torque. It is understood the inner support may be arranged to counter the combined, or both the, first output torque and second output torque. It is further understood that that the outer support and the inner support may be arranged to jointly counter the first output torque and the second output torque.

The second actuator arrangement may be separate from, or spaced apart, from the second deformable wing portion, or from the closed wing. The second actuator arrangement may be located outside, or distant from, the first wing section or the closed wing. The second actuator arrangement may be located within the fuselage and/or in the vertical stabilizer. It is understood that the second connector arrangement operationally connects the second actuator arrangement and the second deformable wing portion.

It is specified the closed wing may have a first wing section and a second wing section that are coupled at the wingtip, and that the first deformable wing portion is then located on, or forms part of, the first wing section. The second deformable wing portion may be located on, or form part of, the first wing section. The second deformable wing portion may be located between the root and the outer end of the first wing section. More specifically, the second deformable wing portion may be located between the first deformable wing portion and the root of the first wing section.

It is understood that the second deformable wing portion may extend between the leading edge and the trailing edge of the first wing section. It is also understood that the leading edge and the trailing edge of the first wing section may form part of the second deformable wing portion. It is further understood that the upper surface and the lower surface of the first wing section may at least in part be defined by the second deformable wing portion.

The second deformable wing portion may be spaced apart from the root of the first wing section. This means that the first wing section does not deform at the root at an activation of the second actuator arrangement. The second deformable wing portion may be spaced apart from the first deformable wing portion. This allows for the first deformable wing portion and the second deformable wing portion to be used as separate control surface. Alternatively, the second deformable wing portion may be connected to, or juxtaposed to, the first deformable wing portion. Alternatively, the second deformable wing portion and the first deformable wing portion may overlap on the first wing section. This allows for the first deformable wing portion and the second deformable wing portion to be used as a single control surface with a combined elastic deformation.

The second deformable wing portion, second actuator arrangement, and second connector arrangement may comprise any of the features, and/or be arranged as, the first deformable wing portion, first actuator arrangement, and first connector arrangement that are described above. For example, the second deformable wing portion may comprise a skin having any of the features of the skin of the first deformable wing portion. The second actuator arrangement may comprise a rotary actuator or linear actuator, and a shaft connector or a root connector having any of the features of, and/or arranged as, the corresponding components described above. The second connector arrangement may be, or comprise, a second shaft arrangement having any of the features of the first shaft arrangement described above. For example, the second shaft arrangement may comprise a first shaft, a second shaft, an inter-shaft connector, one or more additional shafts, a first wing connector, a second wing connector, a plurality of first fasteners, and/or a plurality of second fasteners having any of the features of, and/or arranged as, the corresponding components described above.

As described above, the first connector arrangement may be, or comprise, a first shaft arrangement, and the second connector arrangement may be, or comprise, a second shaft arrangement. Each of the first shaft arrangement and the second shaft arrangement may have a first shaft, as described above.

The first shaft of the second connector arrangement may be aligned with, or parallel with, the first shaft of the first connector arrangement. The first shaft of the second connector arrangement may be located at the first shaft of the first connector arrangement within the first wing section. The first shaft of the second connector arrangement may be hollow, and the first shaft of the first connector arrangement may extend through the first shaft of the second connector arrangement. Worded differently, the first shaft of the first connector arrangement and first shaft of the second connector arrangement may be co-axial, and the first shaft of the second connector arrangement may surround the first shaft of the first connector arrangement.

Alternatively, the first connector arrangement may further have a second shaft, as described above. The first shaft of the second connector arrangement may be aligned with, or parallel with, the first shaft of the first connector arrangement. The first shaft of the second connector arrangement may be located at the first shaft of the first connector arrangement within the first wing section. The first shaft of the second connector arrangement may be positioned beside, or spaced apart from, the first connector arrangement.

As described above, the aircraft may comprise a revolute joint, the first connector arrangement may comprise the revolute joint, and the second connector arrangement may be a second shaft arrangement. The second connector arrangement may have a first shaft, or a first shaft and a second shaft, as described above. The revolute joint may have a rotational axis around which the first wing section, the root of the first wing section, or the deformable wing portion, can rotate. The revolute joint may have a rotary part attached to the first wing section, the root of the first wing section, or the first deformable wing portion, and a cooperating static part attached to the fuselage or vertical stabilizer, or to the static wall portion.

The first shaft, or the second if present, of the second connector arrangement may extend through the revolute joint, or more precisely through the rotary part and/or the static part of the revolute joint. The first shaft, or the second if present, may be aligned with, or parallel with, the rotational axis of the revolute joint.

Any of the abovementioned actuators may be a hydraulic actuator or an electromechanical actuator. It is understood that an actuator is arranged to perform mechanical work by converting energy. The work is understood to be performed at an activation of the actuator, and in extension at an activation of an actuator assembly that comprises the actuator. It is further understood that the aircraft may comprise a control unit and a source of energy coupled to the actuator and arranged to control the function of the actuator. For example, if the actuator is a hydraulic actuator, the control unit may comprise a set of valves and the source of energy may be a hydraulic pressure source, such as a pump. Alternatively, if the actuator is an electromechanical actuator, the control unit may be a set of electric switches and the source of energy may be an electric battery. For example, the valves or the switches may be manually operated. Worded differently, the aircraft may have a flight-control system operationally connected to the actuator and arranged to control the function of the actuator.

The aircraft may comprise an aircraft engine. For example, the aircraft engine may be a piston engine, a gas turbine or reaction engine, or an electric motor. The aircraft may further comprise a propeller arranged to be driven by the aircraft engine. The aircraft may comprise a pod, or nacelle, and a pylon, or strut, wherein the pod is located outside, or spaced apart from, the fuselage, and the pylon connects, or attaches, the pod to the fuselage. The pylon may fix the pod relative to the fuselage, which means that the position or orientation of the pod cannot change relative to the fuselage. The aircraft engine may be located in the pod. The propeller may be rotationally supported by the pod. Arranged this way, the first deformable wing portion can be made structurally weaker and easier to deform, and interference between the propulsion and the first deformable wing portion can be avoided.

The pod may be located between the root of the first wing section and the root of the second wing section. More specifically, the pod may be located at an elevation between the root of the first wing section and the root of the second wing section in level flight. The pod may be located between the fuselage and the wingtip.

The aircraft may comprise landing gear that is connected to the fuselage. The landing gear may be separate from, or spaced apart from, the closed wing. Arranged this way, the first deformable wing portion can be made structurally weaker and easier to deform, and interference between the landing gear and the first deformable wing portion can be avoided.

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended drawings, wherein:
Figs. 1a to 1c are planar projections view of a fixed-wing aircraft,
Figs. 2a and 2b are schematic airfoil cross-sections of a first wing section,
Figs. 3a and 3b are schematic airfoil cross-sections of another first wing section,
Figs. 4a and 4b are schematic airfoil cross-sections of another first wing section,
Figs. 5a and 5b are schematic airfoil cross-sections of another first wing section,
Figs. 6 to 16 are schematic cross-sections of different lower and forward wing sections, and
Figs. 17 and 18 are schematic cross-sections of different upper and rear wing sections.

### DETAILED DESCRIPTION OF THE DRAWINGS

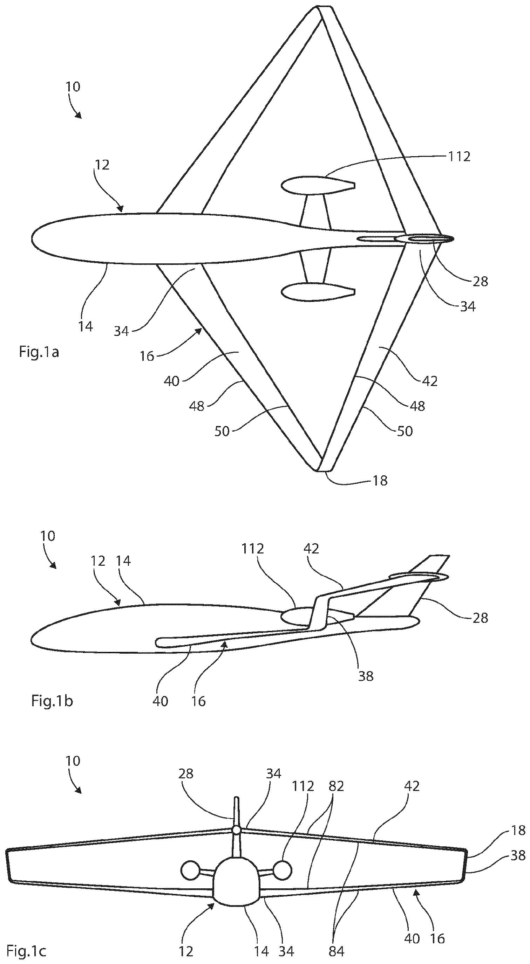

**Figs. 1a to 1c** illustrate planar projections view of a fixed-wing aircraft 10 having an airframe 12. The airframe 12 has fuselage 14, a pair of closed wings 16, and a vertical stabilizer 28. The closed wings 16 are annular joined wings. Each has a lower and forward wing section 40 and an upper and rear wing section 42 and an upright fin 38 that interconnects the wing sections 40 and 42. In an alternative embodiment, the lower and forward wing section 40 and the upper and rear wing section 42 of each closed wing 16 merge at the wingtip 18 in a smooth transition so that the wing sections 40 and 42 forms the complete closed wing 16.

The aircraft 10 has a pair of aircraft engines 122 arranged on opposite sides of the fuselage 14. Each aircraft engines 122 is housed in a pod 114 that is connected to the fuselage 14 by a pylon 116. The aircraft 10 further has landing gear (not shown) connected to the fuselage 14.

For each closed wing 16, the root 34 of the lower and forward wing section 40 is connected to and rigidly attached to the fuselage 14. In an alternative embodiment, the root 34 is rotationally coupled to the fuselage 14. The vertical stabilizer 28 is connected to and rigidly attached to the fuselage 14, extends upwards relative to the fuselage 14, and is located at the rear end of the fuselage 14. The root 34 of the upper and rear wing section 46 is connected to and rigidly attached to the vertical stabilizer 28. This means that the root 34 is coupled to the fuselage 14 via the vertical stabilizer 28. In an alternative embodiment, the root is rotationally coupled to the vertical stabilizer 28.

Each of the lower and forward wing section 40 and an upper and rear wing section 42 has a leading edge 48 and a trailing edge 50. Each of the sections 40 and 42 has an outer upper surface 82 and an outer lower surface 84. The upper surface 82 and the lower surface 84 of each section 40 and 42 are joined at the leading edge 48 and the trailing edge 50 of the wing section 40 and 42, which means that the upper surface 82 and the lower surface 84 of each wing section 40 and 42 extend between the leading edge 48 and the trailing edge 50 of the wing section 40 and 42.

In the alternative embodiment in which the lower and forward wing section 40 and the upper and rear wing section 42 merge at the wingtip 18, the upper surface 82 of the lower and forward wing section 40 is connected to the lower surface 84 of the upper and rear wing section 42 at the wingtip 18, and the lower surface 84 of the lower and forward wing section 40 is connected to the upper surface 82 of the upper and rear wing section 42 at the wingtip 18. This means that the upper surfaces 82 and the lower surfaces 84 of the wing sections 40 and 42 jointly form an outer wing surface that extends between the root 34 of the lower and forward wing section 40 and the root 34 of the upper and rear wing section 42.

The upper surfaces 82 and lower surfaces 84 of the wing sections 40 and 42 has no structural holes, gaps, or cuts and are continuous and smooth. There are no pivotable flaps, pivotable ailerons, or pivotable elevators on the wing sections 40 and 42.

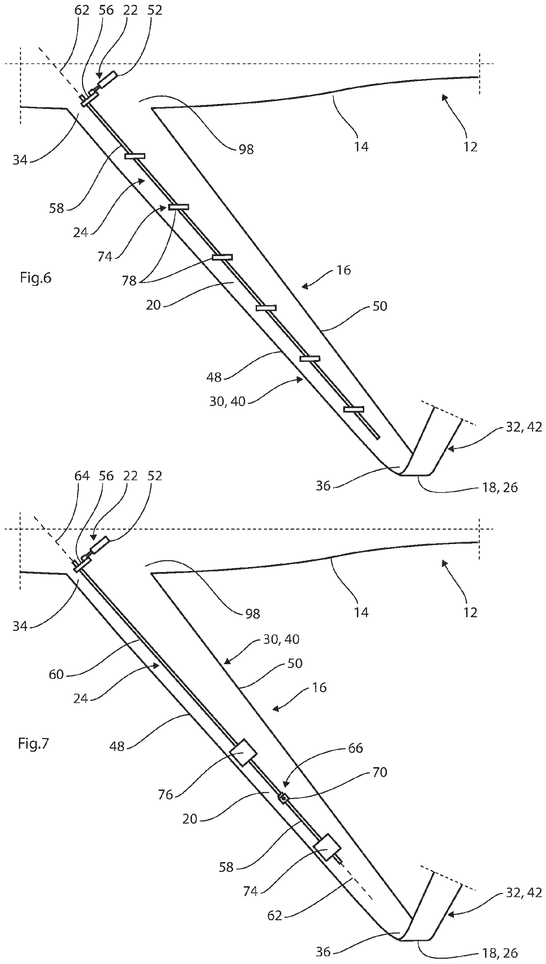

**Fig. 6** is a schematic cross-section of a lower and forward wing section 40 that is a first wing section 30 of the closed wing 16. The upper and rear wing section 42 is a second wing section 32. The first wing section 30 has a root 34 located at the fuselage 14 and an outer end 36 located at the wingtip 18, and that the first wing section 30 extends from the root 34 to the outer end 36. The root 34 of the first wing section 30 is connected to and fixed to the fuselage 14, and the orientation and position of the root 34 cannot change relative to fuselage 14.

The closed wing 16 has a first deformable wing portion 20 located on the first wing section 40. The first deformable wing portion 20 forms the complete first wing section 30 and extends along the complete length of the first wing section 30 from the root 34 to the outer end 36 of the first wing section 30. The first deformable wing portion 20 is arranged to elastically deform at an application of a first output torque to the first deformable wing portion 20.

The airframe 12 further has a first actuator arrangement 22 that is separate from the closed wing 16, and a first connector arrangement 24 that operationally connects the first actuator arrangement 22 and the first deformable wing portion 20.

The first connector arrangement 24 is a first shaft arrangement 24 that has a first shaft 58 that is coupled to the first deformable wing portion 20. The first shaft 58 extends within the first wing section 30 from the root 34 toward to the outer end 36 of the first wing section 30. The first shaft 58 also extend into the fuselage 14. The first shaft 58 is flexible and elastically deformable transverse to the first shaft 58. The first shaft 58 is straight and centered on a first shaft axis 62.

The first actuator arrangement 22 has a first actuator 52 that is a liner actuator in the form of a hydraulic cylinder. It further has a first shaft connector 56 in the form of a lever that connects the first actuator and the first shaft 58 within the fuselage 14. This way, the first actuator arrangement 22 is arranged to supply a first input torque to the first connector arrangement 24 at an activation of the first actuator arrangement 22.

The first connector arrangement 24 has a first wing connector 74 that is connected to the first shaft 58 and the first deformable wing portion 20 and that can apply an output torque to the first deformable wing portion 20. The first wing connector 74 is a non-rigid structure. This way, the first connector arrangement 24 is arranged to apply a first output torque to the first deformable wing portion 20 at a supply of the first input torque to the first connector arrangement 24 at the activation of the first actuator arrangement 22, and the first output torque is the same as the first input torque.

As described above, the closed wing 16 has a first wing section 30 and second wing section 32 that are coupled at the wingtip 18. This way, the closed wing forms an outer support 26 at the wingtip 18 that is arranged to counter the first output torque from the first connector arrangement 24. The root 34 of the first wing section 30 is connected to and rigidly attached to the fuselage 14, and the fuselage 14 forms an inner support 98 that also counters the first output torque. This means that the outer support 26 and the inner support 98 jointly counter the first output torque.

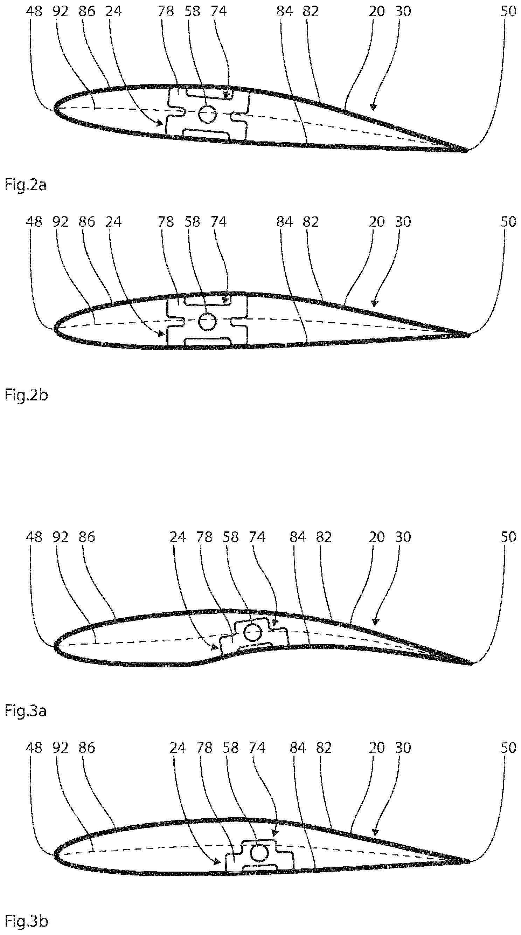

**Figs. 2a and 2b** show schematic airfoil cross-sections of the first wing section 30 across the first deformable wing portion 20. Fig. 2a shows the airfoil cross-section with no output torque delivered to first deformable wing portion 20 and without any deformation of the first deformable wing portion 20. Fig. 2b shows the airfoil cross-section with the output torque delivered to first deformable wing portion 20 and with the first deformable wing portion 20 deformed. When the application of the first output torque is stopped, the deformable wing portion 20 returns to the configuration in Fig. 2a. This way, the first deformable wing portion 20 is arranged to elastically deform at an application of the first output torque to the first deformable wing portion.

The first wing connector 74 of the first connector arrangement 24 is connected to the first deformable wing portion 20 at the upper surface 82 and the lower surface 84 of the first wing section 30. The first wing connector 74 is attached to the first deformable wing portion 20 closer to the leading edge 48 than to the trailing edge 50, and the first shaft 58 is located at and attached to the deformable wing portion 20 closer to the leading edge 48 than to the trailing edge 50 at the first deformable wing portion 20.

The first wing connector 74 has a plurality of first fasteners 78. Each first fastener 78 is a rigid structure that is connected to the first deformable wing portion 20. The first fasteners 78 are elongated and aligned with the intended direction of flight. The first shaft 58 is connected to each first fastener 78. The first fasteners 78 are spaced apart across the first deformable wing portion 20 and along the first shaft 58. This means that, the first fasteners 78 individually and independently connect the first shaft 58 to the first deformable wing portion 20. The first fasteners 78 jointly transfer the first output torque and distribute it across first deformable wing portion 20. Arranged this way, the first shaft 58 can twist between the first fastener 78. The camber line 92 of the airfoil cross-section is maintained and to the orientation of the camber line 92 of the airfoil cross-section is varied at an application of the first output torque to the first deformable wing portion 20. In extension, this means that the first deformable wing portion 20 is arranged to twist relative to the fuselage 14 and the wingtip 18 and to change the angle of attack of the airfoil cross-section at an application of the first output torque. The twisting is around first twist axis centered on the first shaft 58, which means that the twist axis is located closer to the leading edge 48 than to the trailing edge 50 and the position of the trailing edge 50 shifts more than the position of the leading edge 48 at an application of the first output torque to the first deformable wing portion 20.

The first deformable wing portion 20 twists in opposite directions at a change in direction of the first output torque, and in flight it can be used as an aileron. The deformation of the first deformable wing portion 20 varies along a direction from the root 34 to the outer end 36 of the first wing section 3, and the twisting is the greatest at the center of the first deformable wing portion 20.

**Figs.** 3a and 3b show schematic airfoil cross-sections across the first deformable wing portion 20 of another embodiment of the first wing section 30. Fig. 3a shows the airfoil cross-section without any first output torque applied to the deformable wing portion 20, at which the deformable wing portion 20 is not deformed. Fig. 3b shows the airfoil cross-section with the first output torque applied to the deformable wing portion 20, and the deformable wing portion 20 is deformed. When the application of the first output torque is stopped, the deformable wing portion 20 returns to the configuration in Fig. 3a. This way, the first deformable wing portion 20 is arranged to elastically deform at an application of the first output torque to the first deformable wing portion 20.

The first wing connector 74 of the first connector arrangement 24 is connected to the first deformable wing portion 20 at the lower surface 84 and disconnected from the first deformable wing portion 20 at the upper surface 82. The first wing connector 74 is spaced apart from the leading edge 48. The first wing connector 74 and the first shaft 58 of the first shaft arrangement 24 are located closer to the trailing edge 50 than to the leading edge 48. This allows for the first deformable wing portion 20 to maintain the camber at the leading edge 48 and change the camber at the trailing edge 50. The first wing connector 74 is thus arranged to interact directly with the first deformable wing portion 20 at the lower surface 84 and change the lower curvature of the lower surface 84 across the first deformable wing portion 20 at the activation of the first actuator 52.

The first deformable wing portion 20 is also arranged to change the chord length of the airfoil cross-section of the first deformable wing portion 20 at the change of the lower curvature, and to the change the upper curvature of the first deformable wing portion 20 at a change of the chord length. The deformation of the first deformable wing portion 20 varies along a direction from the leading edge 48 to the trailing edge 50 of the first wing section 30. The first deformable wing portion 20 is arranged to maintain the camber line 92 at the leading edge 48 of the first wing section 30 and change the camber line 92 at the trailing edge 50 of the first wing section 30 at an application of the first output torque to the first deformable wing portion 20.

The closed wing 16 has a monocoque skin 86 having a structural strength that is greater at the leading edges 48 than at the trailing edges 50 of the closed wing 16. The skin 86 of the closed wing 16 is a unitary structure and can carry the complete load on closed wing 16 in steady flight. The skin 86 forms the leading edge 48, trailing edge 50, upper surface 82, and lower surface 84 of the closed wing 16. The skin forms a first skin 86 of the first wing section 30 and a second skin 86 of the second wing section 32, and the skin 86 of respective section is thus a monocoque skin that can carry the complete load on the wing section in steady flight. In the embodiment in which the first wing section 30 and the second wing section 32 merge at the wingtip, the first skin 86 and the second skin 86 jointly form a combined skin 86 of the closed wing 16.

The first skin 86 on the first wing section 30 forms a monocoque skin 86 on the first deformable wing portion 20 that is a unitary hollow structure hollow, has a structural strength that is greater at the leading edge 48 than at the trailing edge 50, and that can carry the complete load on first deformable wing portion 20 in steady flight. The skin 86 of the first deformable wing portion 20 forms the leading edge 48, trailing edge 50, upper surface 82, and lower surface 84 at the first deformable wing portion 20. The skin 86 of the first deformable wing portion 20 is continuous and smooth without any gaps or cuts.

The skin 86 of the closed wing 16 is a carbon-fiber reinforced structure. The skins 86 of the first wing section 30, second wing section 32, and first deformable wing portion 20, are composed a carbon-fiber reinforced polymer. The polymer is a cured thermosetting resin the carbon fibers are in the form of overlapping woven sheets of carbon fibers. The sheets are aligned with the upper surface 82 and the lower surface 84 and jointly cross the leading edge 48 and the trailing edge 50 of the skin 86.

**Fig. 7** is a schematic cross-section 30 of another embodiment of an aircraft 10. The first wing section 30 is a lower and forward wing section 40 of one of the closed wings 18. The first shaft arrangement 24 differs from that described in relation in Fig. 6 by further having a second shaft 60 that is connected to the first actuator arrangement 22 and coupled in series to the first shaft 58. The second shaft 60 is arranged as the first shaft 58 relative to the first actuator arrangement 22 as described in relation to Fig. 6. The second shaft 60 is straight, centered on a second shaft axis 64, and elastically deformable transverse to the second shaft 60. The complete first shaft 58 extends within the first wing section 30. The first shaft 58 and the second shaft 60 are parallel and extend from the root 34 of the first wing section 30 towards the outer end 36 of the first wing section 30.

The first shaft arrangement 24 has an inter-shaft connector 66 in the form of a universal joint 70 located within the first wing section 30 that connects the second shaft 60 and the first shaft 58. This way, torque can be transferred between the first shaft 58 and the second shaft 60, and the inter-shaft connector 66 is arranged to rotate the first shaft 58 in the same rotational direction as the second shaft 60.

The first connector arrangement 24 has a first wing connector 74 that is connected to the first shaft 58 and the first deformable wing portion 20. The first wing connector 74 is a rigid structure that rigidly connects the first shaft 58 to the first deformable wing portion 20. The first connector arrangement 24 further has a second wing connector 76 located between the first wing connector 74 and the root 34 of the first wing section 30. The second wing connector 76 is connected to the second shaft 58 and the first deformable wing portion 20. The second wing connector 76 is a rigid structure that rigidly connects the second shaft 60 to the first deformable wing portion 20. This way, the first connector arrangement 24 the first connector arrangement 24 is arranged to apply the first output torque to the first deformable wing portion 20 via the first wing connector 74 and the second wing connector 76, and the first output torque is divided in a first torque component applied via the first wing connector 74 and a second torque component applied via the second wing connector 76. The first torque component and the second torque component are close in magnitude and have the same direction.

The embodiment of Fig. 7 further differs from the embodiment of Fig.6 in that the first deformable wing portion 20 is spaced apart from the root 34 of the first wing section 30, and the center of the first deformable wing portion 20 is located closer to the outer end 36 of the first wing section 30 than to the root 34 of the first wing section 30.

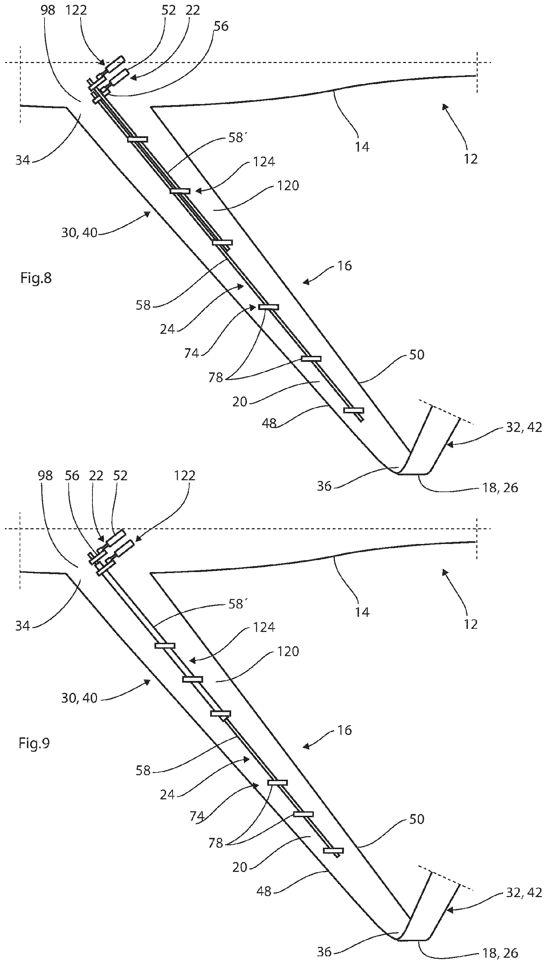

**Fig. 8** is a schematic cross-section 30 of a first wing section 30 of another embodiment of an aircraft 10. The first wing section 30 is a lower and forward wing section 40 of one of the closed wings 18. The aircraft 10 differs from the one described in relation to Fig. 6 in that it further has a second deformable wing portion 120 located on the first wing section 30, a second actuator arrangement 122, and a second connector arrangement 124 that are arranged as the corresponding. The second actuator arrangement 122 and a second connector arrangement 124 share the features of the first actuator arrangement 22 and the first connector arrangement 24 described in relation to Fig. 6. This way, the second actuator arrangement 122 is arranged to supply a second input torque to the second connector arrangement 124 at an activation of the second actuator arrangement 122, the second connector arrangement 124 is arranged to apply a second output torque to the second deformable wing portion 120 at the supply of the second input torque to the connector arrangement, and the second deformable wing portion 120 is arranged to elastically deform at an application of the second output torque to the second deformable wing portion 120. The outer support 26 at the wingtip 18 and the inner support 98 at the fuselage 14 are arranged to jointly counter the combined first output torque and second output torque.

The second deformable wing portion 120 is connected to the first deformable wing portion 20 and is located between the first deformable wing portion 20 and the root 34 of the first wing section 30. The first deformable wing portion 20 is located at the outer end 36 of the first wing section 30, and the second deformable wing portion is located at the root 34 of the first wing section 30. As the first deformable wing portion 20, the second deformable wing portion 120 extends between the leading edge 48 and the trailing edge 50 of the first wing section 30, the leading edge 48 and the trailing edge 50 of the first wing section 30 forms part of the second deformable wing portion 120, and the upper surface 82 and the lower surface 84 of the first wing section 30 are in part defined by the second deformable wing portion 120.

As the first connector arrangement 24, the second connector arrangement 124 is a second shaft arrangement 124. The first shaft 58' of the second connector arrangement 124 is aligned with the first shaft 58 of the first connector arrangement 24, and the first shaft 58' of the second connector arrangement 124 is located at and spaced apart from the first shaft 58 of the first connector arrangement 24 within the first wing section 30.

**Fig. 9** is a schematic cross-section 30 of a first wing section 30 of another embodiment of an airframe 12. It shares its features with the embodiment of Fig. 8 but differs in that the first deformable wing portion 20 is spaced apart from the outer end 36 of the first wing section 30 and the second deformable wing portion 120 is spaced apart from the root 34 of the first wing section 30, which means that the first wing section 30 does not deform at these locations at an activation of the first actuator arrangement 22. The second deformable wing portion 120 is also spaced apart from the first deformable wing portion 20, which means that the first wing section 30 does not deform between these deformable portions 20 and 120. In alternative embodiment, the second deformable wing portion 120 is connected to the first deformable wing portion 20.

The embodiment of Fig. 9 further differs from the embodiment of Fig. 8 in that the first shaft 58' of the second connector arrangement 124 is hollow and the first shaft 58 of the first connector arrangement 24 is co-axial with and extends through the first shaft 58' of the second connector arrangement 124.

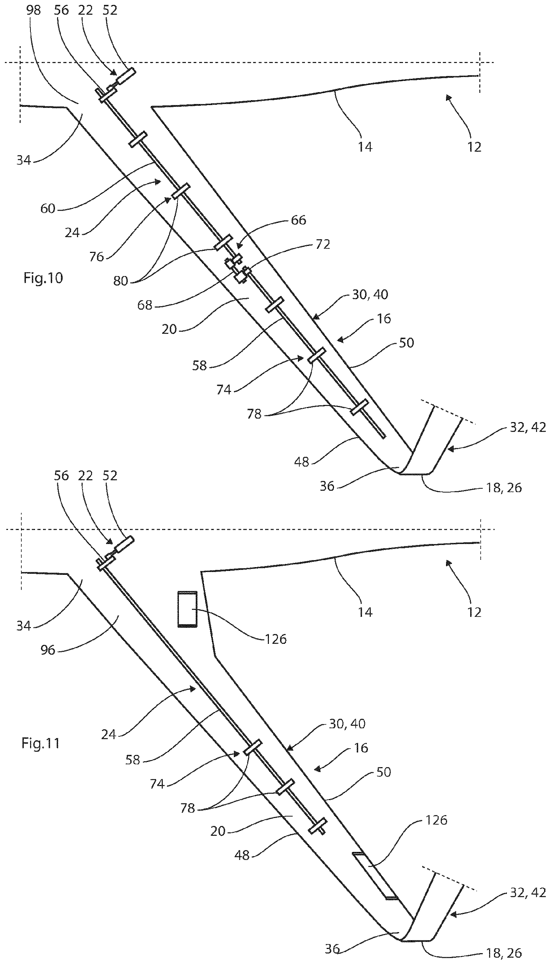

**Fig. 10** is a schematic cross-section 30 of a first wing section 30 of another embodiment of an aircraft 10. It shares its features with the embodiment of Fig. 7 but differs in that inter-shaft connector 66 is a gear arrangement 72 in the form of a two-stage gear. The gear arrangement 72 is arranged to convert a component of the first input torque to a first torque component at a mechanical advantage that is less than one. This means that the first shaft 58 rotates more than the second shaft 60. The gear arrangement 72 has an additional shaft 68 that couples the first shaft 58 to the second shaft 60. The inter-shaft connector 66 generates a counter torque at the conversion of the torque. The inter-shaft connector 66 is connected to the first wing section 30 closer to the leading edge 48 than to the trailing edge 50, and the first wing section 30 forms **a support** at the inter-shaft connector 66 that can counter the counter torque.

The first shaft 58 and the second shaft 60 are aligned, as in the embodiment of Fig. 7. The embodiment of Fig. 10 further differs in that the first wing connector 74 of the first connector arrangement 24 is composed of a plurality of first fasteners 78, as described in relation to Fig. 6, but with the first fasteners 78 aligned transverse to the first shaft 58. This way, the first fasteners 78 jointly transfer the first torque component to and distributes it across the first deformable wing portion 20. Further, the second wing connector 76 has a plurality of second fasteners 80. Each second fastener 80 is a rigid structure and is connected to the second shaft 60 and the first deformable wing portion 20. The second fasteners 80 are elongated and aligned transverse to the second shaft 60. The second fasteners 80 are spaced apart across the first deformable wing portion 20 and along the second shaft 60. This means that the second fasteners 80 individually and independently connect the second shaft 60 to the first deformable wing portion 20. This way, the second fasteners 78 jointly transfer a second torque component and distributes it across first deformable wing portion 20.

**Fig. 11** is a schematic cross-section 30 of a first wing section 30 of another embodiment of an aircraft 10. It shares its features with the embodiment of Fig.6 but differs in that the closed wing 16 has a static wing portion 96 located on the first wing section 30 between the root 34 and the first deformable wing portion 20. The static wing portion 96 forms the root 34 of the first wing section 30 and is thus fixed to the fuselage 14.

The static wing portion 96 extends between the leading edge 48 and the trailing edge 50 of the first wing section 30, and the leading edge 48 and the trailing edge 50 of the first wing section 30 form part of the static wing portion 96. The upper surface 82 and the lower surface 84 of the first wing section 30 are in part defined by the static wing portion 96. The static wing portion 96 is arranged to not deform at an application of the first output torque to the first deformable wing portion 20.

The first deformable wing portion 20 is spaced apart from the outer end 36 of the first wing section 30. This means that the first wing section 30 does not deform at the outer end 36 at an activation of the first actuator arrangement 22. The first wing section 30 has an articulated control surface 126 in the form of a pivotal flap on the static wing portion 96 that is spaced apart from the trailing edge 50. It further has an articulated control surface 126 in the form of a pivotal aileron that is located at the trailing edge 50 and between the first deformable wing portion 20 and the outer end 36 of the first wing section 30.

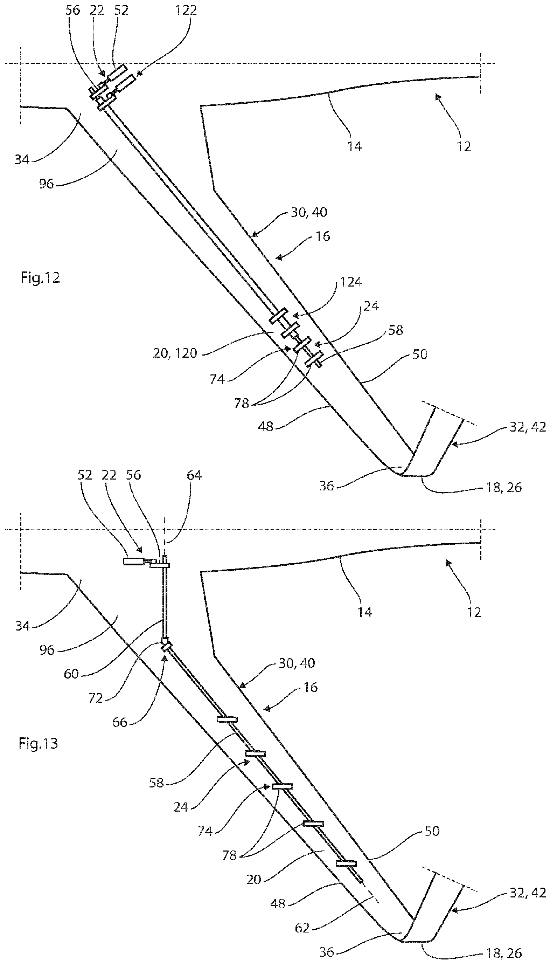

**Fig. 12** is a schematic cross-section 30 of a first wing section 30 of another embodiment of an aircraft 10. It shares its features with the embodiment of Fig. 9 but differs in that the first deformable wing portion 20 and the second deformable wing portion 120 overlap on the first wing section 30. Further, the first fasteners 78 are aligned transverse to the first shaft 58, the second fasteners 80 are aligned transverse to the second shaft 60. The first wing section 30 has a static wing portion 96 arranged as in the embodiment of Fig. 11, and the first deformable wing portion 20 is spaced apart from the outer end 36 of the first wing section 30.

**Fig. 13** is a schematic cross-section 30 of a first wing section 30 of another embodiment of an aircraft 10. It shares its features with the embodiment of Fig. 6 but differs in that the first wing section 30 has a static wing portion 96 arranged as in the embodiment of Fig. 11. The first shaft arrangement 24 differs from that described in relation to Fig. 6 by further having a second shaft 60 that is connected to the first actuator arrangement 22 and coupled in series to the first shaft 58. The second shaft 60 is arranged as the first shaft 58 relative to the first actuator arrangement 22 as described in relation to Fig. 6. The second shaft 60 is straight and centered on a second shaft axis 64. The second shaft 60 extends within the static wing potion 96 and along a direction from the root 34 of the first wing section 30 to the leading edge 48 of the wing section 30. It is inclined relative to the first shaft 58, which means that the first shaft 58 and the second shaft 60, or the first shaft axis 62 and the second shaft axis 64, extend in different directions.

The first shaft arrangement 24 has an inter-shaft connector 66 in the form of a gear arrangement 72 located within the static wing portion 96 of the first wing section 30. The gear arrangement 72 is a bevel gear that connects the second shaft 60 and the first shaft 58 and converts the first input torque to the first torque component at a mechanical advantage that is greater than one. This way, the gear arrangement 72 is arranged to convert the first input torque to a greater first output torque. The gear arrangement 72 is a single-stage gear and the inter-shaft connector 66 is thus arranged to rotate the first shaft 58 and the second shaft 60 in opposite directions.

The gear arrangement 72 generates a counter torque acting on the complete inter-shaft connector 66 at the conversion of the first input torque to the first output torque. The inter-shaft connector 66 is connected to the static wing portion 96. The gear arrangement 72 is spaced apart from the first deformable wing portion 20, connected to the static wing portion 96 closer to the leading edge 48 than to the trailing edge 50, and is arranged to transfer the counter torque to the static wing portion 96. This way, the static wing portion 96 forms a support at the inter-shaft connector 66 arranged to counter the counter torque.

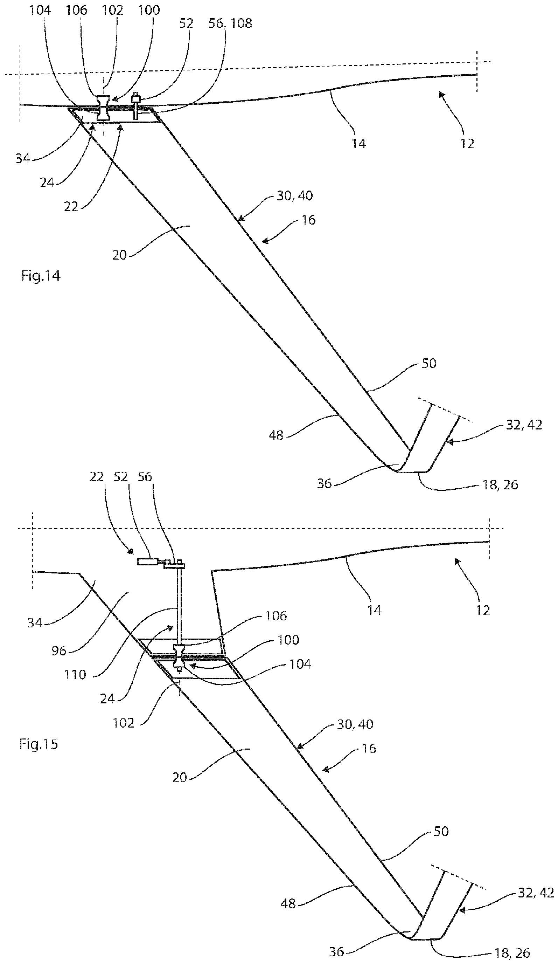

**Fig. 14** is a schematic cross-section of a first wing section 30 of another embodiment of an aircraft 10. The first wing section 30 is a lower and forward wing section 40 of the closed wing 16. The first wing section 30 has a root 34 that is a rigid structure located at the fuselage 14. The first wing section 30 has an outer end 36 located at the wingtip 18, and the first wing section 30 forms a first deformable wing portion 20 that extends from the root 34 to the outer end 36 of the first wing section 30.

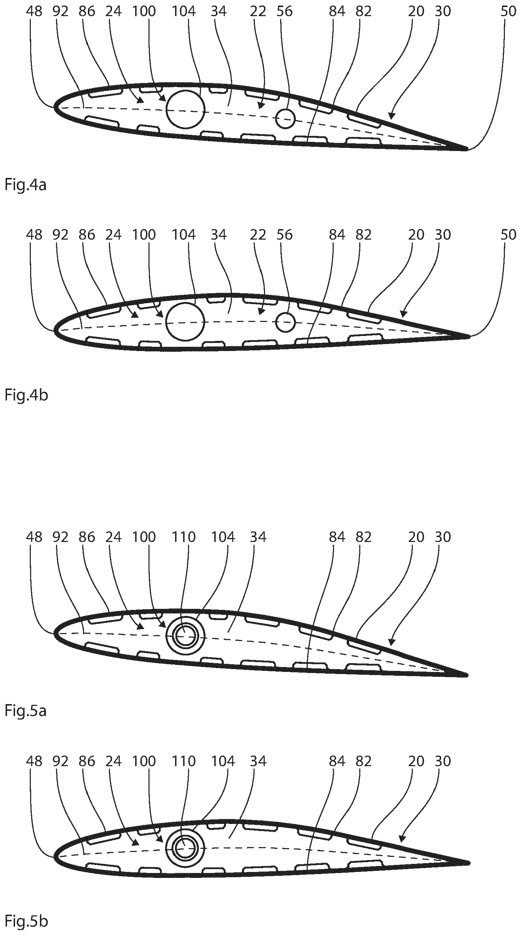

**Figs. 4a and 4b** show the schematic airfoil cross-sections of the first wing section 30 at the root 34. Fig. 4a shows the airfoil cross-section with no output torque delivered to first deformable wing portion 20 and without any deformation of the first deformable wing portion 20. Fig. 4b shows the airfoil cross-section with the root 34 rotated relative to the fuselage 14 at which the first deformable wing portion 20 is twisted and elastically deformed. When the application of the first output torque is stopped, the deformable wing portion 20 returns to the configuration in Fig. 4a. This way, the first deformable wing portion 20 is arranged to elastically deform at a rotation of the root 34 relative to the fuselage 14. The closed wing 16 has a monocoque skin 86, as described in relation to Fig. 6. The monocoque skin 86 is attached to the root 34 of the first wing section 34.

The airframe 12 has a revolute joint 100 with a rotary part 104 attached to the root 34 of the first wing section 30 and cooperating static part 106 attached to the fuselage 14. This way, the revolute joint 100 rotationally supports the root 34 of the first wing section 30 relative to fuselage 14, and the root 34 of the first wing section 30 is rotatably coupled to the fuselage 14. The revolute joint 100 can carry the complete load on the first wing section 30 in flight. The revolute joint 100 is located closer to the leading edge 48 than to the trailing edge 50. The revolute joint 100 has a rotational axis 102 transverse to the intended direction of flight and around which the root 34 of the first wing section 30 can rotate.

The airframe 12 has a first actuator arrangement 22 composed of a first actuator 52, a first root connector 56, the root 34 of the first wing section 30, and the revolute joint 100. The first actuator 52 is located in the fuselage 14 and is a linear actuator in the form of a hydraulic cylinder. The first root connector 56 is a beam 108 that connects the first actuator 53 to the root 34 of the first wing section 30. The first root connector 56 is spaced apart from the revolute joint 100 and is located closer to the trailing edge 50 than to the leading edge 48. The root 34 of the first wing section 30 effectively forms a lever between the revolute joint 100 and the root connector 56 and a first input torque is supplied by the root 34 at an activation of the first actuator 52. The first input torque is delivered directly as an output torque to the first deformable wing portion 20 by the root 34, and the root 34 is effectively a first connector arrangement 24 of the aircraft 10. This means that the root 34 of the first wing section 30 forms part of both the first actuator arrangement 22 and the first connector arrangement 24 that jointly form a first actuator and connector arrangement that is arranged to apply a first output torque to the first deformable wing portion at an activation of the first actuator and connector arrangement. This way, the first actuator arrangement 22 and the first connector arrangement 24 are arranged to twist the first deformable wing portion 20 relative to the fuselage 14 and the wingtip 18 and to change the angle-of-attack of the first wing section 30 at the root 34 of the first wing section 34 at a supply of the first input torque to first connector arrangement 24.

In an alternative embodiment, the closed wing has a static wing portion located on the first wing section at the root of the first wing section and between the root of the first wing section and the first deformable wing portion. The static wing portion forms the root of the first wing section and is thus rotatably coupled to the fuselage. The first deformable wing portion is fixed to the static wing portion. The static wing portion applies the first output torque to the first deformable wing portion without deforming and thus forms part of the first connector arrangement of the airframe. This way, the first actuator arrangement and the first connector arrangement are arranged to twist the first deformable wing portion relative to the static wing portion and to change the angle-of-attack of the first deformable wing portion at the static wing portion at the supply of the first input torque to first connector arrangement.

**Fig. 15** is a schematic cross-section of a first wing section 30 of another embodiment of an aircraft 10. The first wing section 30 is a lower and forward wing section 40 of the closed wing 16. The first wing section has a root 34 that is a rigid structure located at the fuselage 14 and an outer end 36 located at the wingtip 18. The root 34 of the first wing section 30 is connected to and fixed to the fuselage 14, and the orientation and position of the root 34 cannot change relative to fuselage 14. The closed wing 16 has a static wing portion 96 located on the first wing section 30 at the root 34 of the first wing section 30. The first wing section 30 forms a first deformable wing portion 20 that extends from the static wing portion 96 to the outer end 36 of the first wing section 30.

**Figs. 5a and 5b** show the schematic airfoil cross-sections of the first deformable wing portion 20 at the static wing portion 96. Fig. 5a shows the airfoil cross-section with no output torque delivered to the first deformable wing portion 20 and without any deformation of the first deformable wing portion 20. Fig. 5b shows the airfoil cross-section with the root 34 rotated relative to the fuselage 14 at which the first deformable wing portion 20 is twisted and deformed. When the application of the first output torque is stopped, the deformable wing portion 20 returns to the configuration in Fig. 3a. This way, the first deformable wing portion 20 is arranged to elastically deform at a rotation of the root 34 relative to the fuselage 14. The deformable wing portion 20 has a monocoque skin 86, as described in relation to Fig. 6.

The airframe 12 further has a first actuator arrangement 22 and a first connector arrangement 24. The airframe 12 has a revolute joint 100 with a rotary part 104 attached to the first deformable wing portion 20 and cooperating static part 106 attached to the static wing portion 96. This way, the revolute joint 100 rotationally supports the first deformable wing portion 96 relative to static wing portion 96 and the fuselage 14, and the first deformable wing portion is rotatably coupled relative to the fuselage 14. The revolute joint 100 can carry the complete load on the deformable wing portion 20 in flight. The revolute joint 100 is located closer to the leading edge 48 than to the trailing edge 50. The revolute joint 100 has a rotational axis 102 transverse to the intended direction of flight and around which the first deformable wing portion 20 can rotate at the static wing portion 96.

The first connector arrangement 24 is composed of a connector shaft 110 and the revolute joint 100. The connector shaft 110 is connected to the rotary part 104 of the revolute joint 100. The first actuator arrangement 22 is composed of a first actuator 52 and a first shaft connector 56. The first actuator 52 is located in the fuselage 14 and is a linear actuator in the form of a hydraulic cylinder. The first shaft connector 56 is a lever that connects the first actuator 52 to the connector shaft 110. This way, the first actuator arrangement 22 can supply a first input torque to the connector shaft 110, and the rotary part 104 of the revolute joint 100 can deliver the input torque as an output torque to the first deformable wing portion 20. This way, the first actuator arrangement 22 and the first connector arrangement 24 are arranged to twist the first deformable wing portion 20 relative to the and the fuselage 14 and the wingtip 18, and to change the angle-of-attack of the first wing section 30 at the static wing portion 96, at a supply of the first input torque to first connector arrangement 24.

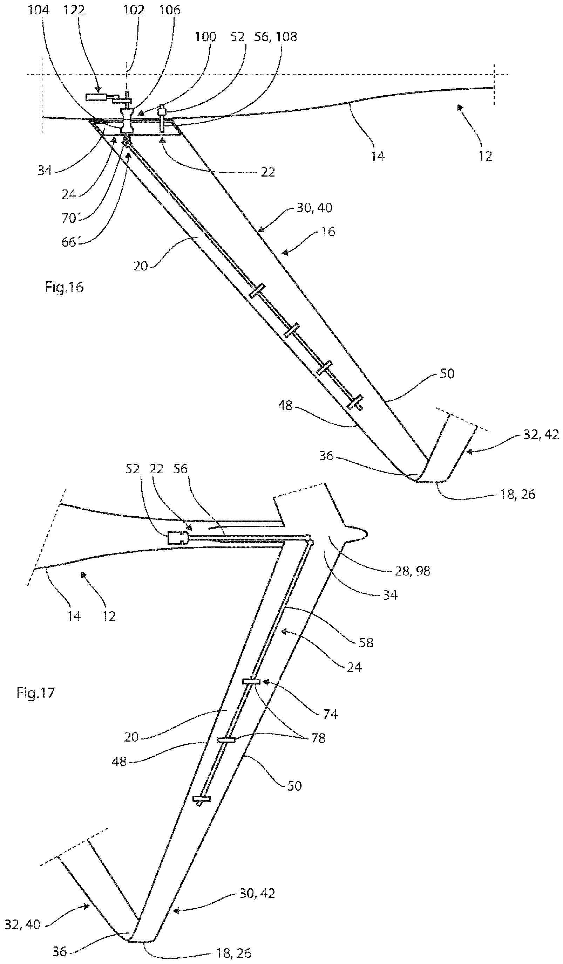

**Fig. 16** is a schematic cross-section 30 of a first wing section 30 another embodiment of an aircraft 10. The first wing section 30 is a lower and forward wing section 40 of one of the closed wings 18. The first shaft arrangement 24 differs from that shown in Fig. 14 by further having a second connector arrangement 124 in the form of a second shaft arrangement 24 arranged as the first shaft arrangement described in relation to Fig. 13, but with the inter-shaft connector 66' being a universal joint 70' instead of a gear arrangement 72. The second shaft 60' of the second shaft arrangement 124 is connected to the second actuator arrangement 122, centered on the rotational axis 102 of the revolute joint 100, and extends through the rotary part 104 and the static part 106 of the revolute joint 100.

As in the embodiment of Fig. 14, the first wing section 30 forms a first deformable wing portion 20 that extends from the root 34 to the outer end 36 of the first wing section 30. The first wing section 30 further forms a second deformable wing portion 120 that is spaced apart from the root 34 and the outer end 36 of the first wing section 30. The second connector arrangement 124 and the second deformable wing portion 120 are arranged to function as the first connector arrangement 24 and the first deformable wing portion 20 in the embodiment of Fig. 13. The first deformable wing portion 20 overlaps with the second deformable wing portion 120.

**Fig. 17** is a schematic cross-section of an upper and rear wing section 42 that is a first wing section 30 of the closed wing 16. The lower and forward wing section 40 is a second wing section 32. The first wing section 30 has a root 34 located at the vertical stabilizer 28 and an outer end 36 located at the wingtip 18, and that the first wing section 30 extends from the root 34 to the outer end 36. The root 34 of the first wing section 30 is connected and fixed to the vertical stabilizer 28, and the orientation and position of the root 34 cannot change relative to vertical stabilizer 28, which is connected to and rigidly attached to the fuselage 14.

The closed wing 16 has a first deformable wing portion 20 located on the first wing section 40. The airframe further has a first actuator arrangement 22 that is separate from the closed wing 16, and a first connector arrangement 24 that operationally connects the first actuator arrangement 22 and the first deformable wing portion 20. The first deformable wing portion 20 is arranged to elastically deform at an application of a first output torque to the first deformable wing portion 20.

The first connector arrangement 24 is a first shaft arrangement 24 that has a first shaft 58 that is coupled to the first deformable wing portion 20. The first shaft 58 extends within the first wing section 30 from the root 34 toward to the outer end 36. The first shaft 58 extend into vertical stabilizer 28. The first shaft 58 is flexible and elastically deformable transverse to the first shaft 58. The first shaft 58 is straight and centered on a first shaft axis 62.

The first actuator arrangement 22 has a first actuator 52 that is a rotary actuator in the form of a torque motor. The first actuator 52 is located in the fuselage 14. It further has a first shaft connector 56 composed of a shaft and a gearset in the form of a bevel gear that connects the first actuator and the first shaft 58 within the vertical stabilizer 28. This way, the first actuator arrangement 22 is arranged to supply a first input torque to the first connector arrangement 24 at an activation of the first actuator arrangement 22.

The first connector arrangement 24 has a first wing connector 74 that is connected to the first shaft 58 and the first deformable wing portion 20 and arranged as the first wing connector 74 described in relation to Fig. 6. For example, the first wing connector 74 has a plurality of rigid first fasteners 78 that are connected to the first deformable wing portion 20. The first deformable wing portion 20 differs from that described in relation to Fig. 6 in that it is spaced apart from the root 34 and the outer end 36 of the first wing section. This way, the first connector arrangement 24 is arranged to apply the first output torque to the first deformable wing portion 20 at a supply of the first input torque to the first connector arrangement 24 at the activation of the first actuator arrangement 22, and the first output torque is the same as the first input torque.

The first wing section 30 and the second wing section 32 are coupled at the wingtip 18. This way, the closed wing 16 forms an outer support 26 at the wingtip 18 that is arranged to counter the first output torque from the first connector arrangement 24. The root 34 of the first wing section 30 is connected to the vertical stabilizer 28. This way, the vertical stabilizer 28 forms an inner support 98 that also counters the first output torque, which means that the outer support 26 and the inner support 98 jointly counter the first output torque.

The first wing section 30 has an airfoil cross-section across the first deformable wing portion 20 generally corresponding to the schematic airfoil cross-section described in relation to Figs. 2a and 2b. The closed wing 16 has a monocoque skin 86 having a structural strength that is greater at the leading edges 48 than the trailing edges 50 of the closed wing 16. The skin 86 is arranged as described in relation to Fig. 6. For example, the skin forms a first skin 86 of the first wing section 30 and a second skin 86 of the second wing section 32, the skin 86 of respective section is a monocoque skin that can carry the complete load on the wing section in steady flight, and the skin 86is composed a carbon-fiber reinforced polymer.

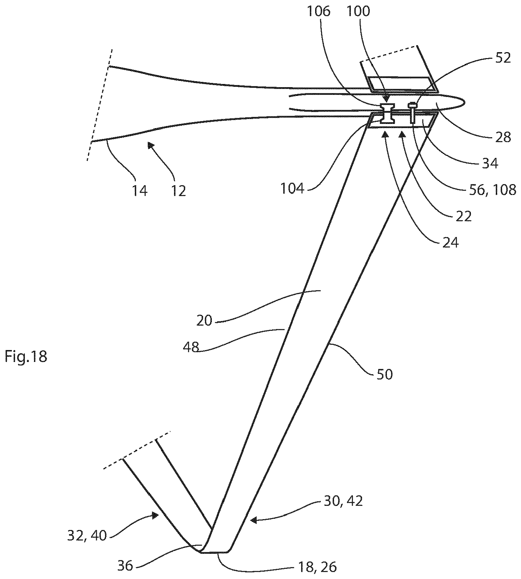

**Fig. 18** is a schematic cross-section of a first wing section 30 of another embodiment of an aircraft 10. The first wing section 30 is an upper and rear wing section 42 of the closed wing 16. The first wing section has a root 34 that is a rigid structure located at the vertical stabilizer 28 and an outer end 36 located at the wingtip 18, and the first wing section 30 forms a first deformable wing portion 20 that extends from the root 34 to the outer end 36 of the first wing section 30.

The first wing section 30 has an airfoil cross-section at the root 34 corresponding to airfoil cross-section described in relation to Figs. 4a and 4b. This way, the first deformable wing portion 20 is arranged to elastically deform at a rotation of the root 34 relative to the vertical stabilizer 28, and in extension relative to the fuselage 14. The closed wing 16 has a monocoque skin 86, as described in relation to Fig. 6. The monocoque skin 86 is attached to the root 34 of the first wing section 34.

The airframe 12 further has a first actuator arrangement 22, a first connector arrangement 24, and a revolute joint 100 arranged as described in relation to the embodiment of Fig. 14, but with the difference that the static part 106 of the revolute joint 100 is attached to the vertical stabilizer 28 and the first actuator 52 is located in the vertical stabilizer 28. This way, the first actuator arrangement 22 and the first connector arrangement 24 are arranged to twist the first deformable wing portion 20 relative to the vertical stabilizer 28and the wingtip 18 and to change the angle-of-attack of the first wing section 30 at the root 34 of the first wing section 34 at a supply of the first input torque to first connector arrangement 24.

### ITEM LIST

10 fixed-wing aircraft
12 airframe
14 fuselage
16 closed wing
18 wingtip
20 first deformable wing portion
22 first actuator arrangement
24 first connector arrangement, first shaft arrangement
26 outer support
28 vertical stabilizer
30 first wing section
32 second wing section
34 root
36 outer end
38 upright fin
40 lower and forward wing section
42 upper and rear wing section
48 leading edge
50 trailing edge
52 first actuator
56 shaft connector, root connector
58 first shaft
60 second shaft
62 first shaft axis
64 second shaft axis
66 inter-shaft connector
68 additional shaft
70 universal joint
72 gear arrangement
74 first wing connector
76 second wing connector
78 first fastener
80 second fastener
82 upper surface
84 lower surface
86 skin
92 camber line
96 static wing portion
98 inner support
100 revolute joint
102 rotational axis
104 rotary part
106 static part
108 beam
110 connector shaft
112 aircraft engine
114 pod
116 pylon
120 second deformable wing portion
122 second actuator arrangement
124 second connector arrangement
126 articulated control surface

## Claims

1. A fixed-wing aircraft (10) that comprises:
a fuselage (14),
a closed wing (16),
a first actuator arrangement (22), and
a first connector arrangement (24),
wherein
the closed wing (16) is coupled to the fuselage (14) and has a wingtip (18) and a first deformable wing portion (20),
the first actuator arrangement (22) is arranged to supply a first input torque to the first connector arrangement (24) at an activation of the first actuator arrangement (22),
the first connector arrangement (24) is arranged to apply an first output torque to the first deformable wing portion (20) at a supply of the first input torque to the connector arrangement,
the first deformable wing portion (20) is arranged to elastically deform at an application of the first output torque to the first deformable wing portion (20),
the closed wing (16) forms an outer support (26) at the wingtip (18) arranged to counter the first output torque.

2. The fixed-wing aircraft (10) according to claim 1, wherein the first actuator arrangement (22) is spaced apart from the first deformable wing portion (20).

3. The fixed-wing aircraft (10) according to claim 1 or 2, wherein the first actuator arrangement (22) is coupled to the fuselage (14), and the fuselage (14) form an inner support (98) arranged to counter the first output torque.

4. The fixed-wing aircraft (10) according to any of the claims 1 to 3, wherein the closed wing (16) has a first wing section (30) and a second wing section (32) that are coupled at the wingtip (18), the first deformable wing portion (20) is located on the first wing section (30), the first wing section (30) has a root (34) and an outer end (36), and the root (34) is coupled to the fuselage (14) and the outer end (36) is located at the wingtip (18).

5. The fixed-wing aircraft (10) according to claim 4, wherein the first connector arrangement (24) is a first shaft arrangement, the first shaft arrangement comprises a first shaft that is coupled to the first deformable wing portion (20), and the first shaft extends along a direction from the root (34) of the first wing section (30) to the outer end (36) of the first wing section (30).

6. The fixed-wing aircraft (10) according to claim 4 or 5, wherein the first wing section (30) has an upper surface (82) and a lower surface (84) that are unbroken and continuous.

7. The fixed-wing aircraft (10) according to any of the claims 1 to 6, wherein the complete first deformable wing portion (20) is a unitary structure, or a non-articulated structure.

8. The fixed-wing aircraft (10) according to any of the claims 1 to 7, wherein the first deformable wing portion (20) has a monocoque skin (86) that is arranged to elastically deform at an application of the first output torque to the first deformable wing portion (20).

9. The fixed-wing aircraft (10) according to claim 8, wherein the skin (86) is a carbon-fiber reinforced structure.

10. The fixed-wing aircraft (10) according to claim 1 to 9, wherein the first deformable wing portion (20) has an airfoil cross-section, the first deformable wing portion (20) is arranged to change the shape of the camber line (92) of the airfoil cross-section at an application of the first output torque to the first deformable wing portion (20).

11. The fixed-wing aircraft (10) according to claim 4, wherein the first deformable wing portion (20) has an airfoil cross-section, the first wing section (30) has a leading edge (48) and a trailing edge (50), the first deformable wing portion (20) is arranged to maintain the shape of the camber line (92) at the leading edge (48) of the first wing section (30) and change the shape of the camber line (92) at the trailing edge (50) of the first wing section (30) at the application of the first output torque to the first deformable wing portion (20).

12. The fixed-wing aircraft (10) according to any of the claims 1 to 11, wherein the first deformable wing portion (20) has an airfoil cross-section, the first deformable wing portion (20) is arranged to change the angle of attack of the airfoil cross-section at an application of the first output torque to the first deformable wing portion (20).

13. The fixed-wing aircraft (10) according to claim 4, wherein the aircraft (10) comprises a revolute joint (100) that is connected to the root (34) of the first wing section (30) and to the fuselage (14), and the revolute joint (100) rotationally supports the root (34) of the first wing section (30) relative to fuselage (14).

14. The fixed-wing aircraft (10) according to claim 4, wherein the closed wing (16) has a static wing portion (96) located on the first wing section (30), the static wing portion (96) is arranged to maintain its shape at an application of the first output torque to the first deformable wing portion (20).

15. The fixed-wing aircraft (10) according to any of the claims 1 to 14, wherein the closed wing (16) further has a second deformable wing portion (120), and the aircraft (10) further comprises:
a second actuator arrangement (122), and
a second connector arrangement (124),
wherein
the second actuator arrangement (122) is arranged to supply an second input torque to the second connector arrangement (124) at an activation of the second actuator arrangement (122),
the second connector arrangement (124) is arranged to apply an second output torque to the second deformable wing portion (120) at a supply of a second input torque to the second connector arrangement (124),
the second deformable wing portion (120) is arranged to elastically deform at an application of the second output torque to the second deformable wing portion (120), and
the outer support (26) at the wingtip (18) is arranged to counter the second output torque.
